# EUROPÄISCHE PATENTSCHRIFT

(11) **EP 3 925 168 B1**
(45) Veröffentlichungstag und Bekanntmachung des Hinweises auf die Patenterteilung: **06.09.2023**
(21) Anmeldenummer: 20703746.6
(22) Anmeldetag: 05.02.2020
(51) Int. Cl.: H04L 12/28

(54) **STEUERLOGIK FÜR DEN KOORDINIERTEN BETRIEB ZWISCHEN EINER HAUSHALTS- GESCHIRRSPÜLMASCHINE UND EINER ALS HAUSHALTSGERÄT VORGESEHENEN LUFTABZUGS- UND/ODER LUFTBEHANDLUNGSVORRICHTUNG, SOWIE ZUGEHÖRIGES STEUERVERFAHREN, DAFÜR AUSGEBILDETE HAUSHALTS- GESCHIRRSPÜLMASCHINE UND LUFTABZUGS- UND/ODER LUFTBEHANDLUNGSVORRICHTUNG**
CONTROL LOGIC FOR COORDINATED OPERATION BETWEEN A DOMESTIC DISHWASHER AND AN AIR-EXTRACTION AND/OR AIR-TREATMENT DEVICE PROVIDED AS A DOMESTIC APPLIANCE, ASSOCIATED CONTROL METHOD, AND DOMESTIC DISHWASHER AND AIR-EXTRACTION AND/OR AIR-TREATMENT DEVICE DESIGNED THEREFOR
LOGIQUE DE COMMANDE POUR LE FONCTIONNEMENT COORDONNÉ D'UN LAVE-VAISSELLE MÉNAGER ET D'UN DISPOSITIF D'EXTRACTION D'AIR ET/OU DE TRAITEMENT D'AIR PRÉVU COMME APPAREIL ÉLECTROMÉNAGER, AINSI QUE PROCÉDÉ DE COMMANDE CORRESPONDANT, LAVE-VAISSELLE MÉNAGER ET DISPOSITIF D'EXTRACTION D'AIR ET/OU DE TRAITEMENT D'AIR CONÇUS À CETTE FIN

(30) Priorität: 14.02.2019 DE 102019201929
(43) Veröffentlichungstag der Anmeldung: 22.12.2021
(73) Patentinhaber: BSH Hausgeräte GmbH, 81739 München (DE)
(72) Erfinder: MILLER, Daniel, 89435 Finningen (DE); RITTNER, Martin, 86465 Welden (DE); HEINLE, Martin, 89353 Glött (DE)
(86) Internationale Anmeldenummer: PCT/EP2020/052852
(87) Internationale Veröffentlichungsnummer: WO 2020/164990

(56) Entgegenhaltungen:
- EP-A1- 3 376 714
- EP-A1- 3 553 384
- WO-A1-2015/168243

## Beschreibung

In zunehmendem Maß sind moderne Haushaltsgeräte, insbesondere Haushalts-Großgeräte der sogenannten "weißen Ware", wie z.B. Kühlschränke, Waschmaschinen, Geschirrspülmaschinen, Backöfen, usw., aber auch sonstige Geräte und/oder Gegenstände in einem Haushalt kommunikationsfähig ausgebildet, d. h. sie weisen jeweils mindestens ein Kommunikationsmittel zur Kommunikation miteinander auf. Dadurch ist es ermöglicht, ein sogenanntes "Smart Home" zu realisieren. Dies bedeutet, dass ein Nutzer über ein Steuergerät wie z.B. ein Smartphone oder eine wohnungsspezifische Steuerzentrale mit den Haushaltsgeräten und/oder Multimedia-Geräte in seinem Haushalt interagieren kann sowie sonstige mit einem Kommunikationsmodul ausgestattete Geräte und Gegenstände dezentral oder zentral fernsteuern kann. Durch die "Smart Home" Technologie können einerseits Alltagsvorgänge automatisiert, andererseits Geräteeinstellungen per Computer, Smartphone, Tablet- PC oder einem sonstigen, bevorzugt mobilen, Kommunikationsendgerät schnell an die persönlichen Bedürfnisse angepasst werden - zu Hause oder unterwegs. In der Praxis ist bereits eine Vielzahl von Steuerapplikationen, wie z.B. in Form von auf einem Smartphone oder Tablet- PC installierbaren Apps, d.h. Interaktionsprozeduren, verfügbar, mit der sich jeweils ein kommunikationsfähiges Haushaltsgerät einzeln steuern bzw. kontrollieren lässt. So kann dieses zum Beispiel durch eine App auf einem Kommunikationsendgerät wie z.B. smartphone ein- und/oder ausgeschaltet werden. Interessant sind für "Smart Home" Anwendungen über eine solche einfache Einzelsteuerung eines Haushaltsgeräts hinausgehende Vernetzungen zwischen mindestens zwei verschiedenen Kategorien von Haushaltsgeräten, welche für deren Nutzer jeweils einen Mehrwert bereitstellen, der über den Nutzen des jeweiligen Haushaltsgeräts bei dessen Einzelbetrieb hinausgeht.

Die EP 3 376 714 A1 betrifft ein Daten- Management-System mit einem Kommunikationsmodul, das ausgebildet ist, mit einer Mehrzahl an Haushaltsgeräten zu kommunizieren, und mit einer Regel- oder Steuereinheit, die ausgebildet ist, mindestens eines der Mehrzahl an Haushaltsgeräten zu regeln oder zu steuern, und mit einer Schnittstelle. Das Daten-Management-System ist ausgebildet, über die Schnittstelle mit einem elektrischen Eingabegerät drahtlos zu kommunizieren, über das die Regel- oder Steuereinheit konfigurierbar ist.

Die Erfindung gemäß dem Anspruch 1 sieht eine Steuerlogik derart vor, dass eine als separates Haushaltsgerät ausgebildete Luftabzugs- und/oder Luftbehandlungsvorrichtung in Abhängigkeit von mindestens einem Zustandsparameter einer Haushalts-Geschirrspülmaschine steuerbar, insbesondere einschaltbar und/oder ausschaltbar, ist. Durch diese erfindungsgemäße Steuerlogik ist eine verbesserte Vernetzung mit Mehrwert zwischen einer als separates Haushaltsgerät ausgebildeten Luftabzugs- und/oder Luftbehandlungsvorrichtung und einer Haushalts- Geschirrspülmaschine bereitgestellt. Sie koordiniert bzw. steuert den Betrieb einer als separates Haushaltsgerät ausgebildeten Luftabzugs- oder Luftbehandlungsvorrichtung in Abhängigkeit von mindestens einem Zustandsparameter einer Haushalts- Geschirrspülmaschine. Der Betrieb, insbesondere der Einschaltzeitpunkt, die Einschaltzeitdauer, und/oder der Ausschaltzeitpunkt, der Luftabzugs- und/oder Luftbehandlungsvorrichtung ist also durch die Steuerlogik an mindestens einen Zustand der Haushalts-Geschirrspülmaschine koppelbar. Mit anderen Worten ausgedrückt ist die erfindungsgemäße Steuerlogik derart ausgebildet, dass der Betrieb der Luftabzugs- und/oder Luftbehandlungsvorrichtung in Abstimmung mit mindestens einem Status bzw. Zustand der Haushalts- Geschirrspülmaschine automatisiert erfolgt. In Abkehr vom bisherigen, isolierten, d.h. singulären Betrieb der Haushalts- Geschirrspülmaschine ist diese jetzt durch die erfindungsgemäße Steuerlogik mit der Luftabzugs- und/oder Luftbehandlungsvorrichtung derart vernetzbar, dass die Luftabzugs- und/oder Luftbehandlungsvorrichtung durch ihren Betrieb auf mindestens einen Zustand bzw. Status der Haushalts-Geschirrspülmaschine und/oder deren Umgebung zusätzlich Einfluss nehmen kann.

Gemäß der Erfindung repräsentiert ein Zustandsparameter der Haushalts- Geschirrspülmaschine insbesondere eine Ausström-Betriebsphase, bei der Prozessluft aus dem Spülbehälter der Haushalts-Geschirrspülmaschine, insbesondere in einen Wohnraum, bevorzugt Küchenraum, in dem die Haushalts- Geschirrspülmaschine und die Luftabzugs- und/oder Luftbehandlungsvorrichtung gemeinsam vorgesehen sind, strömt bzw. entweicht. Schaltet die Steuerlogik die Luftabzugs- und/oder Luftbehandlungsvorrichtung in Abhängigkeit von mindestens einem Zustandsparameter automatisiert ein, welcher eine Ausström-Betriebsphase der Haushalts- Geschirrspülmaschine vertritt oder indiziert, so kann die aus dem Spülbehälter der Haushalts- Geschirrspülmaschine entweichende Prozessluft in zuverlässiger Weise durch die von der Luftabzugs- und/oder Luftbehandlungsvorrichtung erzwungene Luftströmung, die durch den freien Raum von der Haushalts-Geschirrspülmaschine weg zur Luftabzugs- und/oder Luftbehandlungsvorrichtung einen Strömungspfad vorgibt, von ihrem Austrittsbereich am Geschirrspüler bis zur Luftabzugs- und/oder Luftbehandlungsvorrichtung transportiert werden. Dies ist günstig im Hinblick auf verschiedene Zustände der Haushalts- Geschirrspülmaschine.

Der Zustandsparameter, der eine Ausström- Betriebsphase repräsentiert, kann insbesondere ein Zeitmarker für den Startzeitpunkt sein, zu dem die Ausström-Betriebsphase geplant ist bzw. stattfinden soll. Beispielsweise ist mit der Auswahl eines Geschirrspülprogramms und dessen Startzeitpunkt durch die Programmablauffolge des ausgewählten Geschirrspülprogramms ggf. unter Berücksichtigung des Programmfortschritts festgelegt, zu welchem Zeitpunkt die Tür der Geschirrspülmaschine während der spülprogrammabschließenden Trocknungsphase um einen Entlüftungsspalt zur Trocknungsunterstützung geöffnet werden wird und wie lange, d.h. für welche Zeitspanne die Tür in dieser Teilöffnungsstellung stehen bleiben wird, bevor sie wieder geschlossen wird. Der Zustandsparameter bezieht sich allgemein betrachtet somit nicht nur auf den aktuellen Status der Haushalts- Geschirrspülmaschine, sondern auch auf ein erst zukünftig stattfindendes Ereignis oder einen zukünftigen Zeitpunkt.

Im Rahmen der Erfindung wird unter einem Küchenraum insbesondere zum einen ein durch eine Tür abschließbares, separates Zimmer eines Gebäudes, zum anderen auch ein offen gehaltener Wohnküchenraum verstanden. Verallgemeinert können die Küchenmöbel und die Küchen- Haushaltsgeräte in irgendeinem Wohnraum einer Wohnung oder eines Wohnhauses untergebracht sein.

Insbesondere wenn die Ausström- Betriebsphase der Haushalts-Geschirrspülmaschine ein Teilabschnitt oder der Gesamtabschnitt der Trocknungsphase eines Geschirrspülprogramms der Haushalts-Geschirrspülmaschine ist, so dass während ihrer Zeitdauer feuchte und/oder wasserdampfhaltige Prozessluft aus dem Spülbehälter, insbesondere in den Wohnraum, bevorzugt Küchenraum, in dem die Haushalts-Geschirrspülmaschine aufgestellt ist, strömt, kann mittels der von der Steuerlogik aktivierten Luftabzugs- diese feuchte und/oder wasserdampfhaltige Prozessluft aus der Umgebung der Haushalts- Geschirrspülmaschine teilweise oder ganz weggesaugt und damit reduziert oder ganz entfernt werden. Alternativ kann die feuchte und/oder wasserdampfhaltige Prozessluft mittels einer durch die erfindungsgemäße Steuerlogik aktivierten Luftbehandlungsvorrichtung getrocknet bzw. entfeuchtet werden. Die Luftbehandlungsvorrichtung kann dabei vorzugsweise im sogenannten Umluftbetrieb arbeiten, gemäß dem sie die getrocknete Luft in den Wohnraum, bevorzugt Küchenraum zurückspeist, in dem die Haushalts- Geschirrspülmaschine und die Luftbehandlungsvorrichtung gemeinsam vorhanden sind.

Ein erster Fall, bei dem feuchte und/oder wasserdampfhaltige Prozessluft aus dem Spülbehälter heraus in den Raum strömte, in dem die Haushalts- Geschirrspülmaschine aufgestellt ist, ist insbesondere eine Türöffnungsphase während der Trocknungsphase eines Geschirrspülprogramms. Dabei wird die Tür, insbesondere Fronttür, der Haushalts-Geschirrspülmaschine vorzugsweise unter Zuhilfenahme einer automatischen Türöffnungsvorrichtung um einen Entlüftungsspalt gegenüber ihrer, insbesondere vertikalen, Schließeinstellung geöffnet, so dass durch diesen Entlüftungsspalt die feuchte und/oder wasserdampfhaltige Prozessluft aus dem Spülbehälter zur Trocknungsunterstützung entweichen kann.

Alternativ dazu kann während der Ausström- Betriebsphase der Trocknungsphase die feuchte und/oder wasserdampfhaltige Prozessluft durch mindestens eine Ausströmöffnung in mindestens einer Wandung des Spülbehälters und/oder der Tür der Haushalts-Geschirrspülmaschine austreten, wobei die Tür, insbesondere Fronttür, selbst geschlossen bleibt. Dazu kann es zweckmäßig sein, wenn ein der Haushalt-Geschirrspülmaschine zugeordneter Lüfter oder Gebläse eingeschaltet wird und dieser oder dieses die feuchte und/oder wasserdampfhaltige Prozessluft aus dem Spülbehälter durch die mindestens eine Austrittsöffnung herausbläst. Ggf. kann es zweckmäßig sein, wenn die Ausströmöffnung während der ein oder mehrere spülflüssigkeitsführenden Teilprogrammschritte des jeweilig durchzuführenden Geschirrspülprogramms mittels einer ihr zugeordneten Verschlussvorrichtung geschlossen wird, so dass keine Spülflüssigkeit und/oder Feuchtigkeit und/oder Wasserdampf ungewollt aus der Geschirrspülmaschine austreten kann. Um zu vermeiden, dass es während des Ausblasens von Prozessluft durch die eigens vorgesehenen Ausströmöffnung bei geschlossen bleibender Tür, insbesondere Fronttür, zu einem Unterdruck im Spülbehälter kommen kann, ist es zweckmäßig, in mindestens einer Wand des Spülbehälters und/oder der Tür, insbesondere Fronttür, eine Nachströmöffung vorzusehen, durch die Raumluft aus dem Küchenraum nachströmen kann, die gegenüber der aus dem Spülbehälter durch die Ausströmöffnung abgesaugte feuchte und/oder wasserdampfhaltige üblicherweise trockener ist.

Ein zweiter Fall, bei dem während einer Ausström- Betriebsphase Reste von feuchter und/oder wasserdampfhaltiger Prozessluft aus dem Spülbehälter entweichen können, kann insbesondere unmittelbar nach dem Ende der Trocknungsphase eines Geschirrspülprogramms eine Entladephase sein, während der die Tür, insbesondere Fronttür, der Haushalts-Geschirrspülmaschine zum Entladen von Spülgut (meist viel weiter als der für die Trocknungsunterstützung vorgesehene Entlüftungsspalt) geöffnet wird. Insbesondere nimmt dabei die Fronttür eine etwa horizontale Lage ein, so dass auf sie ein unterer Geschirrkorb aus dem Spülbehälter herausgefahren werden kann. Sie dient dann als Absteller und als Auffangwanne für den unteren Geschirrkorb.

Ein weiterer Fall, bei dem während einer Ausström- Betriebsphase feuchte und/oder wasserdampfhaltige Prozessluft aus dem Spülbehälter entweicht, kann insbesondere eine Nachlegephase zum Nachlegen von Spülgut in den Spülbehälter oder eine sonstige Tür-Aufmachphase sein, bei der die Tür, insbesondere die Fronttür, der Haushalts-Geschirrspülmaschine während eines laufenden Geschirrspülprogramms aufgemacht wird. So kann z.B. beim Öffnen der Tür, insbesondere Fronttür, während der Reinigungsphase oder der Klarspülphase eines Geschirrspülprogramms, bei der Spülflüssigkeit erwärmt worden ist, mit Feuchtigkeit beladene Luft und/oder Wasserdampf durch den Türöffnungsspalt in den Aufstellungsraum der Haushalts-Geschirrspülmaschine entweichen.

Ein weiterer Fall einer Ausström- Betriebsphase ist eine Geruchsbeseitigungsphase während einer Stillstandsphase zwischen zwei Geschirrspülprogrammen, während der zur Beseitigung unangenehme Gerüche im Spülbehälter der Haushalts-Geschirrspülmaschine schlecht riechende Luft aus deren Spülbehälter, insbesondere in den Wohnraum, bevorzugt Küchenraum, in dem die Haushalts- Geschirrspülmaschine und die Luftabzugsvorrichtung oder Luftbehandlungsvorrichtung gemeinsam vorgesehen sind, ausströmt und Frischluft in den Spülbehälter nachströmt.

Die Steuerlogik ist nach der Erfindung derart konzipiert, dass die Haushalts-Geschirrspülmaschine über mindestens eine direkte oder indirekte Kommunikationsverbindung mit der Luftabzugs- und/oder Luftbehandlungsvorrichtung derart koppelbar ist, dass mit einer Ausström- Betriebsphase der Haushalts-Geschirrspülmaschine - wie insbesondere vorstehend für verschiedene Fälle aufgeführt - , bei welcher Prozessluft aus dem Spülbehälter der Haushalts-Geschirrspülmaschine, insbesondere in einen Wohnraum, bevorzugt Küchenraum herausströmt, in dem die Haushalts- Geschirrspülmaschine und die Luftabzugsvorrichtung oder Luftbehandlungsvorrichtung gemeinsam vorgesehen sehen sind, eine Einschalt- bzw. "An" ("ON")- Betriebsphase der Luftabzugs- und/oder Luftbehandlungsvorrichtung zeitlich betrachtet korreliert, insbesondere zeitlich betrachtet teilweise oder ganz zusammenfällt. Dadurch kann eine Luftströmung von der Haushalts-Geschirrspülmaschine in Richtung zur Luftabzugs- und/oder Luftbehandlungsvorrichtung dann gezielt erzeugt werden, wenn durch diese erzwungene Luftströmung die aus der Haushalts-Geschirrspülmaschine während der Ausström- Betriebsphase ausströmende Prozessluft von der Haushalts-Geschirrspülmaschine weg zur Luftabzugs- und/oder Luftbehandlungsvorrichtung geführt werden soll. Unter Einschalt- bzw. "An"- Betriebsphase der Luftabzugs- und/oder Luftbehandlungsvorrichtung wird dabei diejenige Betriebsphase verstanden, während der die Luftabzugs- und/oder Luftbehandlungsvorrichtung an ist, d.h. arbeitet bzw. läuft (im Unterschied zu deren "Aus" ("OFF")- Zustand .

Gemäß einer vorteilhaften Weiterbildung der Erfindung kann es insbesondere günstig sein, wenn die Steuerlogik dafür sorgt, dass die "An"- Betriebsphase der Luftabzugs- und/oder Luftbehandlungsvorrichtung zeitlich weitgehend synchron bzw. simultan zu einem Zeitabschnitt oder dem Gesamtverlauf bzw. Gesamtabschnitt der jeweiligen Ausström- Betriebsphase der Haushalts- Geschirrspülmaschine erfolgt. Durch diese zeitliche Überlappung der "An"- Betriebsphase der Luftabzugs- und/oder Luftbehandlungsvorrichtung mit einem Zeitabschnitt oder dem Gesamtverlauf bzw.

Gesamtabschnitt der jeweiligen Ausström- Betriebsphase der Haushalts-Geschirrspülmaschine ist ein zuverlässiger und rechtzeitiger Abtransport der aus dem Spülbehälter austretenden Prozessluft weitgehend sichergestellt, bevor sich diese im Wohnraum, insbesondere Küchenraum, unkontrolliert ausbreiten kann.

In den oben aufgeführten Fällen, die sich jeweils auf eine Ausström- Betriebsphase der Haushalts-Geschirrspülmaschine beziehen, bei welcher feuchte und/oder wasserdampfhaltige Prozessluft aus dem Spülbehälter austritt, wird somit diese feuchte und/oder wasserdampfhaltige Prozessluft zur Luftabzugs- und/oder Luftbehandlungsvorrichtung mittels der von ihr erzwungenen Luftströmung transportiert. Die Luftabzugsvorrichtung lässt dann vorzugsweise mithilfe eines aktivierten Lüfters bzw. Gebläses die feuchte und/oder wasserdampfhaltige Prozessluft aus dem Wohnraum, insbesondere Küchenraum in einen Abluftkanal und von dort ins Freie, d. h. aus der Wohnung bzw. Wohngebäude nach draußen herausströmen. Im Fall einer Luftbehandlungsvorrichtung wird die von ihr angesaugte feuchte und/oder wasserdampfhaltige Prozessluft vorzugsweise entfeuchtet, insbesondere z.B. durch Kondensation und/oder Sorption. Gegebenenfalls kann sie als Umluftsystem ausgebildet sein, so dass sie die getrocknete Luft in den Wohnraum, insbesondere Küchenraum, in der die Haushalts- Geschirrspülmaschine untergebracht ist, zurückgeführt werden kann.

Im Fall einer Geruchsbeseitigungsphase kann die mit unangenehmen Gerüchen belastete Prozessluft über die Luftabzugsvorrichtung aus dem Wohnraum, in der die Haushalts-Geschirrspülmaschine untergebracht ist, abgezogen, d.h. aus diesem heraustransportiert werden. Alternativ kann die mit unangenehmen Gerüchen belastete Prozessluft von der Luftbehandlungsvorrichtung angesaugt werden und dort die schlechten Gerüche mittels Geruchsneutralisierer wie z.B. Aktivkohlefilter oder Sorptionsmaterial neutralisiert werden. Ggf. kann die Luftbehandlungsvorrichtung zusätzlich oder unabhängig hiervon eine Beduftungsvorrichtung umfassen, die die vorzugsweise zuvor geruchsneutralisierte Prozessluft mit mindestens einem Duftstoff beaufschlagt und diese in den Wohnraum, insbesondere Küchenraum ausbläst.

Insbesondere kann es zweckmäßig sein, wenn die Luftabzugs- oder Luftbehandlungsvorrichtung bereits eine vorgegebene Zeitspanne zeitlich vor dem Startzeitpunkt der jeweiligen Ausström- Betriebsphase der Haushalts-Geschirrspülmaschine in ihren Einschalt- Betriebszustand wechselt und diesen zumindest während eines Anfangszeitabschnitts, insbesondere während der gesamten Zeitdauer, der jeweiligen Ausström- Betriebsphase der Haushalts- Geschirrspülmaschine beibehält. Dadurch ist bereits vorab eine Luftströmung von der Haushalts- Geschirrspülmaschine zur Luftabzugs- und/oder Luftbehandlungsvorrichtung erzwungen, so dass diese schon mit Beginn der jeweiligen Ausström- Betriebsphase der Haushalts- Geschirrspülmaschine deren ausströmende Prozessluft mitnimmt und somit in zuverlässiger Weise entlang einem weitgehend definierten Strömungspfad zur Luftabzugs- und/oder Luftbehandlungsvorrichtung transportiert. Dadurch kann sich die ausströmende Prozessluft von Anfang an weniger großräumig im Wohnraum, insbesondere Küchenraum, als im Fall ohne vorverlegter Einschalt- Betriebsphase der Luftabzugs- und/oder Luftbehandlungsvorrichtung verteilen, sondern sie wird auf einem bereits vorab (d.h. vor Beginn der jeweiligen Ausström- Betriebsphase) festgelegten Strömungspfad - vorzugsweise eher fokusiert - von der Haushalts- Geschirrspülmaschine zur Luftabzugs- und/oder Luftbehandlungsvorrichtung mitgeschleppt.

Ausreichend kann es ggf. sein, wenn die Luftabzugs- und/oder Luftbehandlungsvorrichtung zumindest während eines Zeitabschnitts, insbesondere Anfangszeitabschnitts, der jeweiligen Ausström- Betriebsphase der Haushalts-Geschirrspülmaschine in ihrem Einschalt- Betriebszustand ist.

Dadurch, dass während derjenigen Ausström- Betriebsphase, bei der feuchte und/oder wasserdampfhaltige Prozessluft aus dem Spülbehälter ausströmt, durch Aktivieren der Luftabzugs- und/oder Luftbehandlungsvorrichtung dafür gesorgt wird, dass die feuchtigkeitsbeladene und/oder wasserdampfhaltige Prozessluft aus dem Wohnraum, insbesondere Küchenraum, in der die Haushalts- Geschirrspülmaschine untergebracht ist, weitgehend entfernt wird, sind Feuchtigkeitsschäden im Aufstellungsraum weitgehend vermieden. Insbesondere sind Schäden an den der Haushalts- Geschirrspülmaschine benachbarten Küchenmöbeln und/oder an der Arbeitsplatte einer Einbauküche, unterhalb der die Haushalts- Geschirrspülmaschine aufgestellt sein kann, weitgehend vermieden. Das Raumklima im Ausstellungsraum, insbesondere Küchenraum, wird verbessert, da dort die Luft trocken bleibt und nicht unzulässig hoch mit Feuchtigkeit und/oder Wasserdampf belastet wird. Etwaige Schimmelbildung wird verbessert vermieden. Darüber hinaus wird durch die Beseitigung der ausströmenden feuchten und/oder wasserdampfhaltigen Prozessluft der Trocknungsprozess im Spülbehälter der Haushalts-Geschirrspülmaschine verbessert. Denn die feuchte und/oder wasserdampfhaltige Prozessluft wird aus der Umgebung der Haushalts-Geschirrspülmaschine weggeführt und durch trockenere Frischluft ersetzt. Auf diese Weise wird auch eine Rückanfeuchtung des Spülguts im Spülbehälter noch während des Trocknungsgangs und/oder nach Beendigung des Trocknungsgangs des Spülgangs eines Geschirrspülprogramms weitgehend vermieden.

In den vorstehend erläuterten Fällen von Ausström- Betriebsphasen, bei denen jeweils feuchte und/oder wasserdampfhaltige Prozessluft aus dem Spülbehälter herausströmt, kann es insbesondere zweckmäßig sein, wenn die Luftabzugs- oder Luftbehandlungsvorrichtung zu Beginn der jeweiligen Ausström- Betriebsphase der Haushalts- Geschirrspülmaschine mit einem höheren Luftvolumenstrom als im späteren Verlauf der Ausström- Betriebsphase betrieben wird. Dadurch kann dann, wenn Prozessluft mit besonders viel Feuchtigkeit und/oder Wasserdampf aus dem Spülbehälter in den Wohnraum, insbesondere Küchenraum gelangt, diese feuchte und/oder wasserdampfhaltige Prozessluft durch die Luftabzugsvorrichtung aus dem Wohnraum, insbesondere Küchenraum, effizient abtransportiert werden, oder Feuchtigkeit aus der feuchten und/oder wasserdampfhaltigen Prozessluft durch die Luftbehandlungsvorrichtung effizient abgeschieden werden. Dadurch bleibt die Raumluft im Wohnraum, insbesondere Küchenraum, ausreichend trocken, ohne dass es dort zu Schimmelbildung oder zu anderen Beeinträchtigungen kommen kann.

Gemäß einer vorteilhaften Weiterbildung der Erfindung ist die Steuerlogik vorzugsweise Komponente der Haushalts- Geschirrspülmaschine, der Luftabzugs- und/oder Luftbehandlungsvorrichtung, eines, bevorzugt mobilen, Kommunikationsendgeräts, eines lokalen "inhouse"-Servers, "WLAN- routers" und/oder einer sonstigen haus-, oder wohnungszugeordneten digitalen Intelligenz, und/oder mindestens eines Servers, insbesondere einer cloud, des world wide web's (Internets).

Erfindungsgemäß ist die Haushalts- Geschirrspülmaschine über mindestens eine direkte oder indirekte Kommunikationsverbindung mit der Luftabzugs- und/oder Luftbehandlungsvorrichtung koppelbar. Die Kommunikationsverbindung kann insbesondere mindestens eine elektrische Signalübertragungsleitung und/oder mindestens eine Luftschnittstelle umfassen. Dabei weist vorzugsweise die Haushalts-Geschirrspülmaschine eine zugeordnete Kommunikationseinheit sowie die Luftabzugs- und/oder Luftbehandlungsvorrichtung ebenfalls eine ihr zugeordnete Kommunikationseinheit auf. Die Steuerlogik ist erfindungsgemäß derart ausgebildet, dass über die mindestens eine direkte oder indirekte Kommunikationsverbindung an die Kommunikationseinheit der Luftabzugs- und/oder Luftbehandlungsvorrichtung mindestens ein Informationssignal, insbesondere Steuersignal, sendbar ist, das veranlasst, dass die Luftabzugs- und/oder Luftbehandlungsvorrichtung zumindest während eines Zeitabschnitts, insbesondere Anfangszeitabschnitts, der jeweiligen Ausström-Betriebsphase der Haushalts- Geschirrspülmaschine, während der Prozessluft aus dem Spültbehälter der Haushalts- Geschirrspülmaschine, insbesondere in den Wohnraum, bevorzugt Küchenraum, herausströmt, in ihrem Einschalt- Betriebszustand ist, oder bereits um eine vorgegebene Zeitspanne zeitlich vor dem Startzeitpunkt der AusströmBetriebsphase der Haushalts- Geschirrspülmaschine in ihren Einschalt- Betriebszustand wechselt und diesen zumindest während eines Anfangszeitabschnitts, insbesondere während der gesamten Zeitdauer, der Ausström- Betriebsphase der Haushalts-Geschirrspülmaschine beibehält.

Unter direkter Kommunikationsverbindung wird dabei im Rahmen der Erfindung insbesondere verstanden, dass die Steuerlogik ausgehend von der Haushalts-Geschirrspülmaschine zur Luftabzugs- und/oder Luftbehandlungsvorrichtung einen direkten Kommunikationspfad bereitstellt. Dies ist z.B. dann möglich, wenn die Kommunikationseinheit der Haushalts- Geschirrspülmaschine und die Kommunikationseinheit der Luftabzugs- und/oder Luftbehandlungsvorrichtung jeweils "Bluetooth"- fähig sind.

Ist die Kommunikationseinheit der Haushalts-Geschirrspülmaschine und die Kommunikationseinheit der Luftluftabzugs- und/oder Luftbehandlungsvorrichtung beispielsweise jeweils WLAN-fähig ausgebildet, so kann die Haushalts-Geschirrspülmaschine mit der Luftabzugs- und/oder Luftbehandlungsvorrichtung über eine indirekte Kommunikationsverbindung kommunizieren. Unter indirekter Kommunikationsverbindung wird dabei vorzugsweise verstanden, dass der Kommunikationsverkehr von der Haushalts- Geschirrspülmaschine zur Luftabzugs- und/oder Luftbehandlungsvorrichtung unter Zwischenschaltung einer, vorzugsweise zentralen, Steuerlogik erfolgt. Diese kann beispielsweise auf einem lokalen, wohnungszugeordneten WLAN- router, oder auf mindestens einem Server, bevorzugt einer cloud, des world wide webs (Internets) implementiert sein.

Unterstützt die Steuerlogik gemäß einer vorteilhaften Weiterbildung der Erfindung eine indirekte Kommunikationsverbindung zwischen der Haushalts- Geschirrspülmaschine zur Luftabzugs- und/oder Luftbehandlungsvorrichtung, so umfasst die indirekte Kommunikationsverbindung zweckmäßigerweise eine Aufwärts- Luftschnittstelle zwischen der Kommunikationseinheit der Haushalts- Geschirrspülmaschine und der zentralen Steuerlogik sowie eine Abwärts- Luftschnittstelle zwischen der zentralen Steuerlogik und der Kommunikationseinheit der Luftabzugsvorrichtung oder Luftbehandlungsvorrichtung.

Nach einer zweckmäßigen Weiterbildung der Erfindung kann mindestens ein Parameter eines Sensors, insbesondere Raumluftgütesensors, bevorzugt Feuchtigkeitssensors oder Geruchssensors, als zusätzliches Kriterium zum Steuern, insbesondere Einschalten und/oder Ausschalten, der Luftabzugs- und/oder Luftbehandlungsvorrichtung, herangezogen werden. Der Sensor kann vorzugsweise Komponente der Luftabzugs- und/oder Luftbehandlungsvorrichtung sein. So kann es z.B. zweckmäßig sein, die Luftabzugs- und/oder Luftbehandlungsvorrichtung in einer Ausström- Betriebsphase der Haushalts- Geschirrspülmaschine, während der feuchte und/oder wasserdampfhaltige Prozessluft aus dem Spülbehälter, insbesondere in den Wohnraum, bevorzugt Küchenraum, in dem die Haushalts- Geschirrspülmaschine und die Luftabzugs- und/oder Luftbehandlungsvorrichtung räumlich getrennt voneinander installiert sind, herausströmt, erst dann einzuschalten, wenn vom Feuchtigkeitssensor ein bestimmter Grenzwert für den Feuchtigkeitsgehalt der Raumluft, d.h. die Luftfeuchtigkeit, insbesondere im Wohnraum, bevorzugt im Küchenraum, überschritten wird. Solange dort der Feuchtigkeitsgehalt der Raumluft im Wohnraum, insbesondere Küchenraum, unterhalb dieses Grenzwerts liegt, wird die Raumluft als ausreichend trocken betrachtet, so dass ein unnötiges Einschalten der Luftabzugs- und/oder Luftbehandlungsvorrichtung unterbleiben kann. Dies spart elektrische Energie ein und vermeidet einen durch Betreiben der Luftabzugs- und/oder Luftbehandlungsvorrichtung, insbesondere durch deren ein oder mehrere laufende Lüfter, etwaig bedingten Geräuschpegel. Der Grenzwert liegt vorzugsweise niedriger als der Luftfeuchtigkeits- Schwellwert, der zum Einschalten der Luftabzugs- oder Luftbehandlungsvorrichtung für das Kochen insbesondere auf einem Kochfeld, das vorzugsweise unterhalb der Luftabzugs- oder Luftbehandlungsvorrichtung positioniert ist, vorgegeben bzw. festgelegt oder ermittelt ist. Solange während einer Ausström- Betriebsphase die Luftfeuchtigkeit der Raumluft den Grenzwert überschreitet, arbeitet die Luftabzugsvorrichtung und saugt die feuchte und/oder wasserdampfhaltige Luft aus dem Wohnraum, insbesondere Küchenraum, ab, oder die Luftbehandlungsvorrichtung sorgt für einen Entzug von Feuchtigkeit und/oder Wasserdampf z.B. durch Kondensation und/oder Sorption aus der Raumluft. Wenn der Feuchtigkeitsgehalt der Raumluft schließlich soweit auf einen Wert absinkt, der den Grenzwert wieder unterschreitet, wird die Luftabzugs- und/oder Luftbehandlungsvorrichtung wieder ausgeschaltet.

In entsprechender Weise kann durch die Heranziehung mindestens eines Gasparameters, der durch mindestens einen der Luftabzugs- und/oder Luftbehandlungsvorrichtung zugeordneten Geruchssensor ermittelt wird, dafür gesorgt werden, dass die Luftabzugs- und/oder Luftbehandlungsvorrichtung nur dann während einer Geruchsbeseitigungsphase der Haushalts- Geschirrspülmaschine eingeschaltet wird, wenn ein oder mehrere festgelegte Grenzwerte von ein oder mehreren unangenehmen, für den Menschen wahrnehmbaren Gasen in der Raumluft überschritten wird.

Die Luftabzugs- und/oder Luftbehandlungsvorrichtung kann nach einer vorteilhaften Weiterbildung der Erfindung vorzugsweise eine zur Positionierung oberhalb eines Kochfelds vorgesehene Dunstabzugshaube oder ein in ein Kochfeld integrierter Kochfeldabzug sein.

Alternativ kann die Luftabzugsvorrichtung auch Komponente einer kontrollierten Wohnraumentlüftung sein.

Die Erfindung betrifft ferner eine Haushalts- Geschirrspülmaschine gemäß dem unabhängigen Anspruch 12, sowie eine Luftabzugs- und/oder Luftbehandlungsvorrichtung gemäß dem unabhängigen Anspruch 13. Weiterhin bezieht sich die Erfindung auf ein Haushaltsgerätesystem gemäß dem unabhängigen Anspruch 16 und auf ein zum Anspruch 1 korrespondierendes Steuerverfahren gemäß dem Anspruch 17.

Die vorstehend erläuterten und/oder in den Unteransprüchen wiedergegebenen vorteilhaften Aus- und Weiterbildungen der Erfindung können dabei - außer z. B. in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Ausführungsbeispiele darstellenden Zeichnungen näher erläutert.

Es zeigen, jeweils in einer schematischen Prinzipskizze:

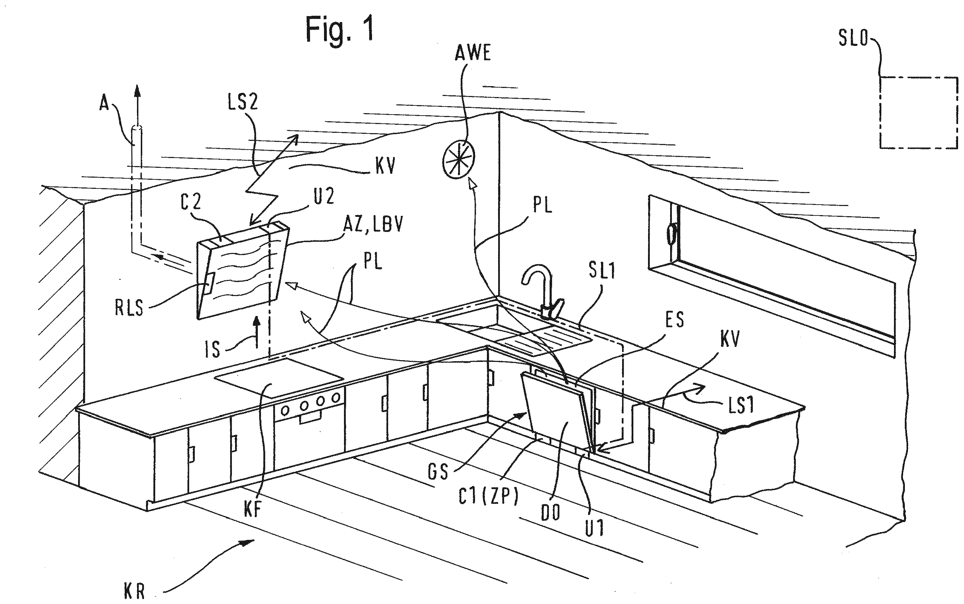

- Figur 1: einen Küchenraum, in dem eine Haushalts- Geschirrspülmaschine und eine Abzugs- und/oder Luftbehandlungsvorrichtung als separate Haushaltsgeräte untergebracht sind und/oder ist und mittels einer zugeordneten Steuerlogik in Abhängigkeit von mindestens einer Zustandsphase der Haushalts-Geschirrspülmaschine miteinander kooperieren,

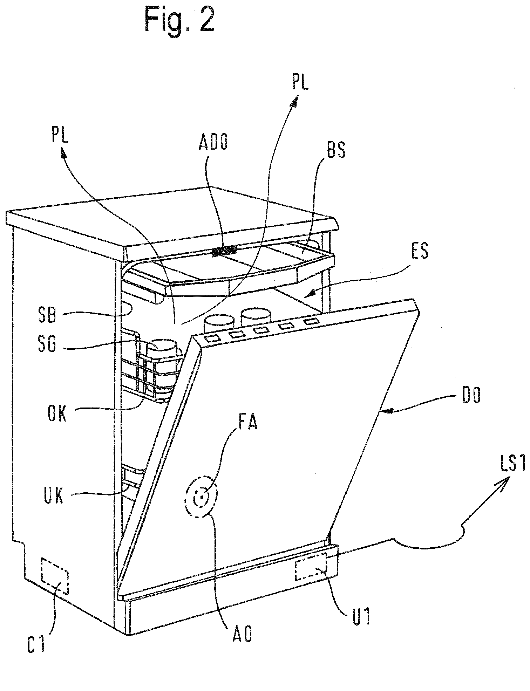

- Figur 2: in perspektivischer Ansicht die Haushalts- Geschirrspülmaschine nach Figur 1 im Detail mit einer um einen Entlüftungsspalt aufgemachten Fronttür zur Durchführung einer Ausström- Betriebsphase,

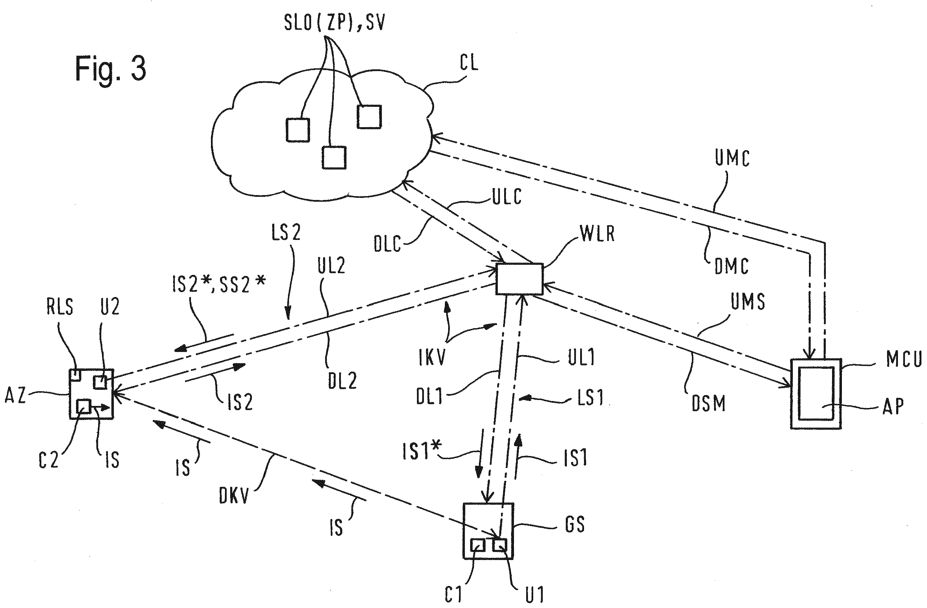

- Figur 3: exemplarische Vernetzungskonzepte zwischen der Haushalts-Geschirrspülmaschine und der Luftabzugs- oder Luftbehandlungsvorrichtung von Figur 1 zur Steuerung der Luftabzugs- oder Luftbehandlungsvorrichtung in Abhängigkeit von mindestens einem Zustandsparameter der Haushalts-Geschirrspülmaschine,

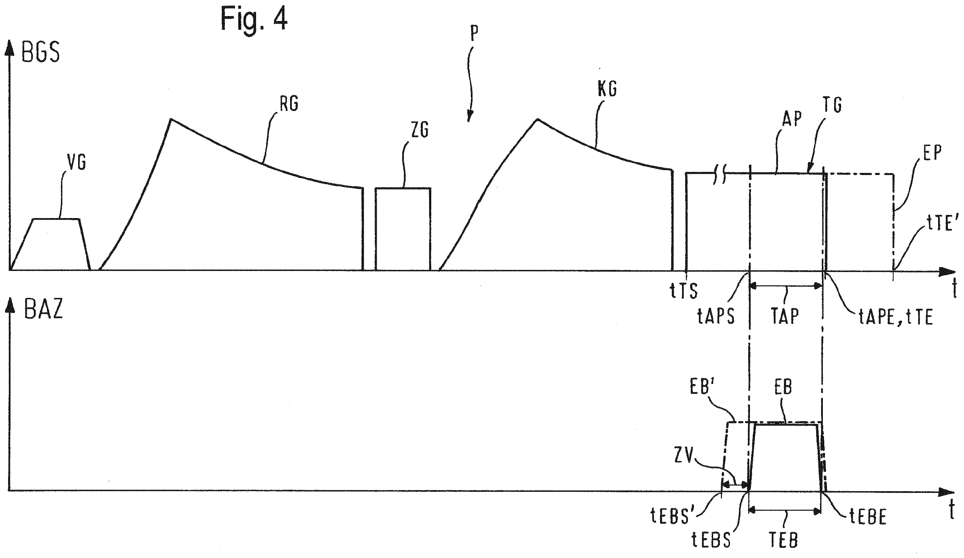

- Figur 4: die zeitliche Koordinierung zwischen der Einschalt- Betriebsphase der Luftabzugs- oder Luftbehandlungsvorrichtung und einer während der Trocknungsphase eines Geschirrspülprogramms der Haushalts-Geschirrspülmaschine von Figur 1 stattfindenden Ausström- Betriebsphase, bei der feuchte und/oder wasserdampfhaltige Prozessluft aus dem Spülbehälter strömt, und

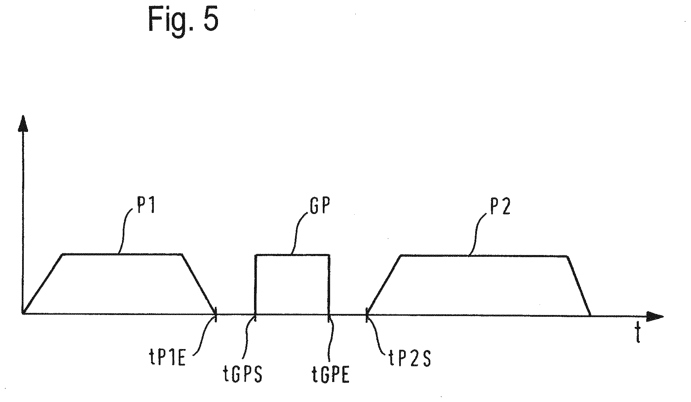

- Figur 5: eine Geruchsbeseitigungsphase zwischen zwei zeitlich voneinander beanstandeten Geschirrspülprogrammen.

In den Figuren 1 - 5 sind einander entsprechende Bestandteile mit denselben Bezugszeichen versehen. Dabei sind nur diejenigen Bestandteile mit Bezugszeichen versehen und erläutert, welche für das Verständnis der Erfindung erforderlich sind.

Figur 1 zeigt schematisch in perspektivische Darstellung einen Küchenraum KR, in dem eine Kücheneinrichtung untergebracht ist. Diese umfasst Küchenmöbel wie z.B. mindestens einen Unterschrank, Hochschrank, Wandschrank, Hängeschrank, Einbauschrank oder dergleichen, eine Spüle bzw. ein Waschbecken mit Warm- und/oder Kaltwasserhahn, sowie Haushalts- Großgeräte wie z.B. einen Backofen, ein Kochfeld, eine Luftabzugs- und/oder Luftbehandlungsvorrichtung, einen Kühlschrank oder eine Kühl- /Gefrierkombination, eine Haushalts- Geschirrspülmaschine, usw..... Hier im Ausführungsbeispiel von Figur 1 ist als Luftabzugsvorrichtung insbesondere eine Dunstabzugshaube AZ beispielhaft oberhalb eines Kochfelds KF an einer Wand des Küchenraums KR montiert. Alternativ kann insbesondere ein im Kochfeld KF integrierter Kochfeldabzug vorgesehen sein. Selbstverständlich sind auch andere Varianten von Luftabzugsvorrichtungen wie z.B. Deckenhauben, Inselhauben, Zwischenbauhaben, Unterbauhauben, usw.... möglich. Die jeweilige Luftabzugsvorrichtung weist ein oder mehrere Mittel wie z.B. einen Lüfter bzw. ein Gebläse zum Absaugen von Küchenraumluft auf und führt diese angesaugte Küchenraumluft über mindestens einen an ihr angeschlossenen Abluftkanal A aus dem Küchenraum KR heraus. Der Abluftkanal A ist in der Figur 1 strichpunktiert angedeutet. Über ihn lässt sich im laufenden Betrieb der Dunstabzugshaube AZ die Küchenraumluft entweder direkt ins Freie außerhalb des Wohngebäudes, oder in einen gebäudeseitigen Abluftschacht und von dort ins Freie, d. h. außerhalb des Wohngebäudes abziehen, insbesondere ausblasen.

Gegebenenfalls kann anstelle oder zusätzlich zu einer Luftabzugsvorrichtung eine Luftbehandlungsvorrichtung vorgesehen sein. Diese arbeitet vorzugsweise ihm Umluftbetrieb, d. h. sie saugt Küchenraumluft an, behandelt diese, und bläst diese wieder in den Küchenraum KR aus. Mittel zum Behandeln der Küchenraumluft sind bei eine solche Luftbehandlungsvorrichtung z.B. Aktivkohlefilter, Kondensationsabscheider, Sorptionsmaterial, usw..... Eine solche Luftbehandlungsvorrichtung, die im Umluftbetrieb arbeitet, ist insbesondere bei Niedrigenergiehäusern oder Passivhäusern von Vorteil, da im Unterschied zu einer Luftabzugsvorrichtung keine Durchbrechung der Gebäudeisolationshülle durch einen Abluftkanal oder Abluftschacht erforderlich ist. In der Figur 1 ist die optionale Luftbehandlungsvorrichtung mit dem Bezugszeichen LBV gekennzeichnet.

Gegebenenfalls kann die Luftabzugsvorrichtung Komponente einer kontrollierten Wohnraumentlüftung sein. Diese kann insbesondere einen oder mehrere Abluftkanäle umfassen, der oder die über eine Öffnung wie z.B. in einer den Küchenraum KR begrenzenden Wand oder Decke Küchenraumluft aus dem Küchenraum KR abführt oder abführen. Dazu kann in der Wandöffnung oder dem Abluftkanal ein Lüfter bzw. Gebläse vorgesehen sein. In der Figur 1 ist in der Wandöffnung ein steuerbarer Lüfter AWE installiert. Alternativ kann die Wandöffnung durch eine steuerbare Klappe, Lamelle oder sonstige Verschlussvorrichtung auf- und/oder zumachbar sein.

Die Haushalts- Geschirrspülmaschine GS von Figur 1 weist eine Kommunikationseinheit U1, und die Dunstabzugshaube AZ weist eine Kommunikationseinheit U2 auf. Insbesondere ist die Kommunikationseinheit U1 der Haushalts-Geschirrspülmaschine derart ausgebildet, dass ein Informationssignal, insbesondere Steuersignal, über eine direkte oder indirekte Kommunikationsverbindung an die Dunstabzugshaube AZ übermittelbar ist. Korrespondierend hierzu ist die Kommunikationseinheit U2 der Dunstabzugshaube AZ derart ausgebildet, dass sie das von der Kommunikationseinheit U1 gesendete Informationssignal, insbesondere Steuersignal, empfangen und an die Kontrolleinheit C1 der Geschirrspülmaschine zur Auswertung weiterleiten kann. Die Kommunikationseinheit U1 der Haushalts- Geschirrspülmaschine GS lässt sich in vorteilhafter Weise durch deren Kontrolleinheit C1 kontrollieren, die auch für die verschiedenen Programmabläufe der Geschirrspülmaschine, d. h. verallgemeinert für deren bestimmungsgemäßen Betrieb verantwortlich ist. Die Kontrolleinheit C1 ist in der Figur 2, die schematisch in perspektivischer Darstellung die Haushalts-Geschirrspülmaschine GS zeigt, strichpunktiert angedeutet. In entsprechender Weise weist die Dunstabzugshaube AZ eine Kontrolleinheit C2 auf, die ihren jeweiligen Betriebsablauf steuert und mit ihrer Kommunikationseinheit U2 in kommunikativer Verbindung steht.

Erfindungsgemäß ist nun eine Steuerlogik derart vorgesehen, dass die als separates Haushaltsgerät ausgebildete Dunstabzugshaube AZ in Abhängigkeit von mindestens einem Zustandsparameter ZP der Haushalts- Geschirrspülmaschine GS steuerbar, insbesondere einschalt- und/oder ausschaltbar, ist.

Nach einer ersten, vorteilhaften Ausführungsvariante ist diese Steuerlogik Komponente der Haushalts- Geschirrspülmaschine. Sie kann insbesondere Teilkomponente deren Kontrolleinheit C1 sein. Vorzugsweise ist sie in Form einer Ablaufprozedur hardware- und/oder softwaremäßig in der Kontrolleinheit C1 hinterlegt. Ein Zustandsparameter ZP der Haushalts- Geschirrspülmaschine GS repräsentiert eine Ausström- Betriebsphase AP, bei der Prozessluft PL aus dem Spülbehälter SB der Haushalts- Geschirrspülmaschine GS in den Küchenraum KR strömt, in dem die Haushalts- Geschirrspülmaschine GS und die Dunstabzugshaube AZ räumlich getrennt voneinander gemeinsam vorgesehen sind. Diese Ausström- Betriebsphase AP ist vorzugsweise ein Teilabschnitt oder der Gesamtabschnitt der Trocknungsphase TG eines Geschirrspülprogramms P der Haushalts- Geschirrspülmaschine GS, während dem feuchte und/oder wasserdampfhaltige Prozessluft PL aus dem Spülbehälter SB in den Küchenraum KR strömt. Durch das Ausströmen der feuchten und/oder wasserdampfhaltigen Prozessluft PL wird in vorteilhafter Weise der Trocknungsprozess während der Trocknungsphase des jeweiligen Geschirrspülprogramms unterstützt bzw. begünstigt.

In der oberen Hälfte der Figur 4 ist anhand eines schematischen Ablaufdiagramms der zeitliche Ablauf BGS der einzelnen Phasen eines beispielhaften Geschirrspülprogramms P aufgetragen, bei dem während der Trocknungsphase TG eine Ausström- Betriebsphase AP auftritt. Entlang der Abszisse dieses Ablaufdiagramms ist dabei die Zeit t aufgetragen. In der unteren Hälfte der Figur 4 ist passend hierzu der zeitliche Ablauf BAZ der Einschalt-Betriebsphase der Dunstabzugshaube AZ in Abhängigkeit von der Zeit t aufgezeigt.

Das Geschirrspülprogramm P umfasst insbesondere mindestens eine Vorspülphase VG, eine Reinigungsphase RG, mindestens eine Zwischenspülphase ZG, eine Klarspülphase KG und eine finale Trocknungsphase TG. Verallgemeinert betrachtet umfasst das jeweilige Geschirrspülprogramm somit mindestens eine spülflüssigkeitsführende Phase, bei der das zu reinigende Spülgut SG im Spülbehälter SB mittels ein oder mehrerer Sprüheinrichtungen mit Flüssigkeit beaufschlagt wird, und eine danach folgende, spülgangabschließende Trocknungsphase, während der das zuvor nassgewordene Spülgut SG im Spülbehälter SB getrocknet wird. Zur Halterung bzw. Lagerung des Spülguts sind ein oder mehrere in Tiefenrichtung heraus- und/oder hineinfahrbare Geschirrkörbe wie z.B. ein Oberkorb OK und ein Unterkorb UK vorgesehen. Ggf. ist im Spülbehälter SB oberhalb des Oberkorbs OK noch eine Besteckschublade BS für Besteck und/oder Kleinteile angeordnet.

Während der Vorspülphase VG wird üblicherweise Frischwasser oder sauberes Speicherwasser mittels ein oder mehrerer Sprüheinrichtungen auf das Spülgut SG im Spülbehälter gesprüht. Am Ende und/oder nach der Vorspülphase wird die Spülflüssigkeit gegebenenfalls teilweise oder ganz aus dem Spülbehälter entfernt, z.B. mittels einer (hier in den Figuren 1, 2 der zeichnerischen Einfachheit halber nicht gezeigten) Entleerungspumpe abgepumpt. Unter Umständen kann diese Vorspülphase auch entfallen.

Während der anschließenden Reinigungsphase RG wird mit Reinigungsmittel versetztes Wasser, insbesondere Frischwasser, oder mit Reinigungsmittel versetztes sauberes, in einem Speicherbehälter aus mindestens einem vorhergehenden Teilprogrammschritt des laufenden Geschirrspülprogramms oder eines vorausgehenden Geschirrspülprogramms zwischengespeichertes Brauchwasser mittels der ein oder mehreren Sprüheinrichtungen, wie z.B. mittels rotierender Sprüharme, feststehender oder rotierender Sprühdüsen, Sprührohre, oder dergleichen auf das Spülgut SG aufgebracht. Dabei wird die mit Reinigungsmittel versetzte Spülflüssigkeit vorzugsweise auf eine geforderte Mindesttemperatur mittels einer Heizeinrichtung (, die der zeichnerischen Einfachheit halber in den Figuren 1, 2 nicht dargestellt ist,) aufgeheizt. Am Ende und/oder nach dieser Reinigungsphase RG wird die benutzte Spülflüssigkeit gegebenenfalls wieder teilweise oder ganz aus dem Spülbehälter SB entfernt, insbesondere mittels einer (in den Figuren 1, 2 der Einfachheit halber nicht gezeigten) Entleerungspumpe abgepumpt.

Daraufhin folgt mindestens eine Zwischenspülphase ZG, bei der vorzugsweise Frischwasser oder aus mindestens einem vorhergehenden Teilprogrammschritt des laufenden Geschirrspülprogramms oder eines vorausgehenden Geschirrspülprogramms zwischengespeichertes Brauchwasser auf das Spülgut mittels der ein oder mehreren Sprüheinrichtungen aufgebracht wird. Der jeweilige Zwischenspülgang ZG kann gegebenenfalls auch entfallen.

Schließlich folgt eine Klarspülphase KG, bei der mit Klarspülmittel versetztes Wasser, insbesondere Frischwasser, oder mit Klarspülmittel versetztes sauberes, in einem Speicherbehälter aus mindestens einem vorhergehenden Teilprogrammschritt des laufenden Geschirrspülprogramms oder eines vorausgehenden Geschirrspülprogramms zwischengespeichertes Brauchwasser mittels der ein oder mehreren Sprüheinrichtungen auf das Spülgut im Spülbehälter versprüht wird. Vorteilhafterweise wird dazu das mit Klarspüler versetzte Wasser mittels einer Heizeinrichtung, die hier in den Figuren 1, 2 der zeichnerischen Einfachheit halber weggelassen ist, auf eine geforderte Mindesttemperatur aufgeheizt. Schließlich wird das mit Klarspülmittel versetzte Wasser am Ende und/oder nach der Klarspülphase KG aus dem Spülbehälter SB entsorgt, insbesondere mittels einer ebenfalls nicht gezeigtenEntleerungspumpe abgepumpt.

Anschließend erfolgt die Trocknungsphase TG. Diese beginnt hier im Ausführungsbeispiel (siehe Figur 4) zum Zeitpunkt tTS und endet zum Zeitpunkt tTE. Die Trocknung kann auf verschiedene Art und Weise erfolgen, wie z.B. mittels sogenannter Eigenwärme-/Kondensationstrocknung, da ein oder mehrere Wände des Spülbehälters kälter als das beim Klarspülgang aufgeheizte Spülgut SG sind. Mindestens eine Spülbehälterwand kann zusätzlich durch einen an ihr außen angebrachten Wärmetauscher wie z.B. einen mit kaltem Frischwasser gefüllten Wassereinlauftank aktiv gekühlt werden. Daneben oder in Kombination sind auch aktive Trocknungssysteme möglich, wie z.B. ein Sorptionstrocknungssystem, bei dem reversibel definierbares Sorptionsmaterial zur Sorption von Feuchtigkeit aus der im Spülbehälter SB vorhandenen feuchten und/oder wasserdampfhaltigen Prozessluft verwendet wird.

Zur Trocknungsunterstützung ist es vorteilhaft, wenn die feuchte und/oder wasserdampfhaltige Prozessluft PL während einer Ausström- Betriebsphase AP aus dem Spülbehälter SB nach außen in den Küchenraum KR entweichen kann. Insbesondere ist es zweckmäßig, wenn während einer Anfangszeitdauer der Trocknungsphase TG die Tür, insbesondere Fronttür DO, der Haushalts- Geschirrspülmaschine GS zunächst geschlossen bleibt, um einen möglichst großen Anteil an Feuchtigkeit aus der Prozessluft PL an den gegenüber dem zuvor während der Reinigungs- und/oder Klarspülphase aufgeheizten Spülgut SG kühleren Innenwänden des Spülbehälters auskondensieren zu lassen, und dann anschließend die Fronttür DO vorzugsweise unter Zuhilfenahme einer automatischen Türöffnungsvorrichtung ADO (siehe Figur 2) um einen Entlüftungsspalt ES gegenüber ihrer vertikalen Schließendstellung für die geplante Ausström- Betriebsphase AP zu öffnen. Dadurch kann die noch feuchte und/oder wasserdampfhaltige Prozessluft PL aus dem Spülbehälter SB durch den Entlüftungsspalt ES in den Küchenraum KR entweichen. Im Ausführungsbeispiel von Figur 4 beginnt die Ausström- Betriebsphase AP zeitlich später als der Startzeitpunkt tTS des Trocknungsgangs TG zum späteren Zeitpunkt tAPS. Sie endet mit dem Ende tTE des Trocknungsgangs TG zum Zeitpunkt tAPE = tTE. Gegebenenfalls ist es aber vorteilhaft, wenn die Fronttür DO nach Abschluss der Ausström- Betriebsphase AP vor dem oder zum Endzeitpunkt tTE des Trocknungsgangs TG wieder geschlossen wird, um eine Rückanfeuchtung des Spülguts SG durch nachströmende etwaig feuchte Küchenraumluft in zuverlässiger Weise zu vermeiden. Die Zeitspanne der Ausström- Betriebsphase AP zwischen deren Startzeitpunkt tAPS und deren Endzeitpunkt tAPE ist in der Figur 4 mit tAP bezeichnet.

Nach einer anderen vorteilhaften Variante kann es gegebenenfalls auch zweckmäßig sein, eine Ausström- Betriebsphase AP dadurch zu erzeugen, dass während der Trocknungsphase TG die feuchte und/oder wasserdampfhaltige Prozessluft PL durch mindestens eine Ausströmöffnung AO in mindestens einer Wandung des Spülbehälters SB und/oder der Fronttür DO aus dem Spülbehälter SB austritt, insbesondere ausgeblasen wird, wobei die Tür, insbesondere Fronntür DO, selbst geschlossen bleibt. Dazu kann es insbesondere zweckmäßig sein, einen Lüfter oder ein Gebläse einzusetzen, der die Prozessluft PL aus dem Spülbehälter SB durch die Austrittsöffnung AO - hier im Ausführungsbeispiel der Fronttür DO - nach außen herauslässt. In der Figur 2 ist eine solche Ausströmöffnung AO und ein in ihr oder stromaufwärts von ihr positionierter Lüfter FA strichpunktiert in der Fronttür DO angedeutet. Vorteilhaft kann es insbesondere sein, wenn die Ausströmöffnung wie z.B. AO während der flüssigkeitsführenden Phasen des jeweilig durchzuführenden Geschirrspülprogramms mittels einer ihr zugeordneten Verschlussvorrichtung verschlossen ist, so dass die Ausströmungsöffnung wie z.B. AO während des jeweiligen Spülbetriebs gegen Feuchtigkeits-, Wasserdampf, und/oder gar Wasseraustritt abgedichtet ist. Um zu vermeiden, dass es während des Ausblasens von Prozessluft durch die eigens vorgesehenen Ausströmöffnung wie z.B. AO bei geschlossen bleibender Tür, insbesondere Fronttür, zu einem Unterdruck im Spülbehälter kommen kann, ist es zweckmäßig, in mindestens einer Wand des Spülbehälters und/oder der Tür, insbesondere Fronttür, eine Nachströmöffung vorzusehen, durch die Raumluft aus dem Küchenraum nachströmen kann, die gegenüber der aus dem Spülbehälter durch die Ausströmöffnung abgesaugte feuchte und/oder wasserdampfhaltige üblicherweise trockener ist. Der zeichnerischen Einfachheit halber ist eine solche Nachströmöffnung in den Figuren 1, 2 weggelassen worden.

Die Einschalt- Betriebsphase EB der Dunstabzugshaube AZ deckt sich vorzugsweise mit der Ausström- Betriebsphase AP der Geschirrspülmaschine GS, d. h. der Startzeitpunkt tEBS und der Endzeitpunkt tEBE der Einschalt- Betriebsphase EB der Dunstabzugshaube AZ fallen mit dem Startzeitpunkt tAPS und dem Endzeitpunkt tAPE der Auström-Betriebsphase zusammen. Anders ausgedrückt verläuft die Einschalt- Betriebsphase EB der Dunstabzugshaube AZ zeitlich betrachtet im Wesentlichen synchron bzw. simultan zur Ausström- Betriebsphase AP der Haushalts- Geschirrspülmaschine. Nach einem vorteilhaften Ausführungsbeispiel entspricht somit die Zeitspanne bzw. Zeitdauer TEB der Einschalt- Betriebsphase EB der Dunstabzugshaube AZ im Wesentlichen der Zeitdauer tAP der Ausström- Betriebsphase AP der Haushalts- Geschirrspülmaschine.

Besonders zweckmäßig kann es sein, wenn die Einschalt- Betriebsphase der Dunstabzugshaube AZ schon etwas früher als die Ausström- Betriebsphase AP der Haushalts- Geschirrspülmaschine GS beginnt. Der Einschaltzeitpunkt tEBS' für diese modifizierte Einschalt- Betriebsphase EB' liegt also zeitlich früher als der Startzeitpunkt tAPS der Ausström- Betriebsphase AP. Mittels eines von der Kommunikationseinheit U2 der Dunstabzugshaube AZ empfangenen Informationssignals wie z.B. IS, insbesondere Steuersignals, das z.B. zuvor von der Steuerlogik der Haushalts- Geschirrspülmaschine GS über deren Kommunikationseinheit U1 direkt übermittelt worden ist, lässt sich nach einer besonders günstigen Variante veranlassen, dass die Dunstabzugshaube AZ bereits um eine Zeitspanne ZV zeitlich vor dem Startzeitpunkt tAPS der Ausström- Betriebsphase AP der Geschirrspülmaschine GS in ihren Einschalt- Betriebszustand EB' wechselt und diesen zumindest während eines Anfangszeitabschnitts, insbesondere während der Gesamtzeitdauer TAP = tAPE - tAPS, der Ausström- Betriebsphase AP beibehält. Diese modifizierte Einschalt-Betriebsphase ist in der Figur 4 mit EB' gekennzeichnet und zusätzlich strichpunktiert eingezeichnet. Dadurch ist weitgehend sichergestellt, dass auf jeden Fall mit Beginn der Ausström- Betriebsphase AP schon ein definierter Luftstrom von der Haushalts- Geschirrspülmaschine zu der räumlich entfernten Dunstabzugshaube AZ - in Verallgemeinerung zur Abzugs- und/oder Luftbehandlungsvorrichtung - vorhanden ist, so dass die aus dem Spülbehälter SB austretende Prozessluft PL zwangsweise mitgeschleppt wird und sich nicht willkürlich bzw. unkontrolliert großräumig im Küchenraum KR verteilen kann.

Es kann aber auch schon ausreichend sein, wenn lediglich während eines Zeitabschnitts der Ausströmbetriebsphase, welcher kürzer als deren Gesamtdauer TAP ist, die Abzugs- und/oder Luftbehandlungsvorrichtung zu betreiben.

Das von der Steuerlogik der Haushalt-Geschirrspülmaschine gesendete Informationssignal, insbesondere Steuersignal, wird zweckmäßigerweise zu einem Zeitpunkt vor dem Startzeitpunkt der Einschalt- Betriebsphase wie z.B. EB, EB' an die Kontrolleinheit C2 der Dunstabzugshaube AZ übermittelt. Dies kann beispielsweise unmittelbar mit dem Startzeitpunkt eines auszuführenden Geschirrspülprogramms erfolgen. Insbesondere kann dazu das gesendete Informationssignal, insbesondere Steuersignal, Informationen über die Zeitablauffolge des jeweilig auszuführenden Geschirrspülprogramms wie z.B. Angaben über die Dauern dessen verschiedenen Phasen oder über dessen Programmfortschritt enthalten.

Die Steuerlogik in der Kontrolleinheit C1 der Haushalt-Geschirrspülmaschine GS kann nach einer vorteilhaften Ausführungsvariante ihre Kommunikationseinheit U1 anweisen, insbesondere auf direktem Kommunikationsweg DKV wie z.B. über eine Luftschnittstelle ein Steuersignal IS (siehe Figur 3) zu senden, das die automatische Inbetriebnahme der Dunstabzugshaube AZ während der Ausström- Betriebsphase AP der Haushalts-Geschirrspülmaschine GS initiiert. In der Figur 3 ist die direkte Kommunikationsverbindung von der Haushalts- Geschirrspülmaschine GS zur Dunstabzugshaube AZ als optionale Variante gestrichelt eingezeichnet und mit DKV bezeichnet.

Für eine direkte Kommunikationsverbindung DKV zwischen der Haushalt-Geschirrspülmaschine GS und der Dunstabzugshaube AZ kann es zweckmäßig sein, wenn die sendende Kommunikationseinheit U1 der Haushalts- Geschirrspülmaschine GS und die empfangende Kommunikationseinheit U2 der Dunstabzugshaube AZ jeweils z.B. den sogenannten Bluetooth- Standard oder einen anderes für die direkte Kommunikation konzipiertes Übertragungsverfahren verwenden.

Anstelle einer direkten Kommunikationsverbindung über eine Luftschnittstelle kann es auch zweckmäßig sein, wenn zwischen der Kontrolleinheit C1 oder der Kommunikationseinheit U1 der Haushalts- Geschirrspülmaschine GS und der Kontrolleinheit C2 oder der Kommunikationseinheit U2 der Dunstabzugshaube AZ mindestens eine elektrische Signalleitung vorhanden ist. Eine solche elektrische Signalleitung ist in der Figur 1 strichpunktiert angedeutet und mit SL1 bezeichnet. Die Kommunikationseinheit U1 kann insbesondere Bestandteil der Steuerlogik C1 der Haushalts- Geschirrspülmaschine GS und in entsprechender Weise kann die Kommunikationseinheit U2 insbesondere Bestandteil der Kontrolleinheit C2 der Dunstabzugshaube AZ sein. Bei einer direkten Kommunikationsverbindung über eine elektrische Steuerleitung wie z.B. SL1 können die beiden Kommunikationseinheiten U1, U2 gegebenenfalls sogar ganz entfallen, wenn die Kontrolleinheit C1 direkt mit der Kontrolleinheit C2 über mindestens eine elektrische Steuerleitung verbunden ist.

Die Figur 3 veranschaulicht in schematischer Darstellung als weitere vorteilhafte Ausführungsvariante eine indirekte Kommunikationsverbindung IKV zwischen der Haushalts- Geschirrspülmaschine GS und der Dunstabzugshaube AZ. Nach einer ersten Möglichkeit können die Haushalts- Geschirrspülmaschine GS und die Dunstabzugshaube AZ über ihre Kommunikationseinheiten U1, U2 in ein lokales, Netzwerk eingebunden sein. Dieses lokale Netzwerk kann insbesondere benutzerspezifisch z.B. für den Bewohner einer Wohnung erstellt bzw. aufgebaut sein. Günstig kann es sein, wenn die Haushaltsgeräte im Küchenraum KR der Wohnung zu einem eigens für sie erzeugten lokalen Netzwerk angemeldet sind. Der Kommunikationsverkehr läuft dabei über einen lokalen "inhouse"- Server, insbesondere "WLAN- router", und/oder einer sonstigen haus- oder wohnungsspezifisch, bevorzugt küchenraumspezifisch, zugeordneten digitalen Intelligenz. Die Kommunikationseinheit U1 der Haushalts- Geschirrspülmaschine GS weist eine Luftschnittstelle LS1 zu einem "WLAN router" WLR auf. Diese Luftschnittstelle LS1 umfasst dabei zum einen eine Aufwärts- Luftschnittstelle UL1 zum Senden von Signalen IS1 von der Kommunikationseinheit U1 zum "WLAN- router" WLR, und zum anderen eine Abwärts- Luftschnittstelle DL1 zum Empfang von Signalen durch die Kommunikationseinheit U1, welche vom "WLAN router" WLR gesendet werden. In entsprechender Weise ist die Dunstabzugshaube AZ über eine bidirektionale Luftschnittstelle LS2 mit dem "WLAN Router" WLR verbunden. Sie umfasst ebenfalls eine Aufwärts- Luftschnittstelle UL2 zum Senden von Signalen IS2 von der Kommunikationseinheit U2 zum "WLAN router" WLR. In umgekehrter Richtung ist die Abwärts- Luftschnittstelle DL2 zum Senden von Signalen IS2* vom "WLAN router" WLR zur Kommunikationseinheit U2 der Dunstabzugshaube vorhanden. Möchte die Haushalts-Geschirrspülmaschine GS, dass sich die Dunstabzugshaube AZ passend zur Ausström-Betriebsphase AP während des Trocknungsgangs TG ihres jeweilig ablaufenden Geschirrspülprogramms P einschaltet, so sendet sie über die Aufwärts- Luftschnittstelle UL1 ein Informationssignal IS1, insbesondere ein Steuersignal, an den "WLAN router" WLR. Dieser übermittelt daraufhin ein korrespondierendes Informationssignal, insbesondere Steuersignal IS2* an die Kommunikationseinheit U2 der Dunstabzugshaube AZ, durch welches initiiert wird, dass sich die Abzugsvorrichtung AZ in gewünschter Weise zeitlich passend zur Ausström- Betriebsphase AP der Haushalts-Geschirrspülmaschine einschaltet und während eines vorgebbaren Teilabschnitts oder während der Gesamtzeitdauer der Ausström- Betriebsphase läuft.

Insbesondere kann es dazu zweckmäßig sein, wenn die Steuerlogik zum Koppeln der Einschalt- Betriebsphase EP der Dunstabzugshaube AZ und der Ausström-Betriebsphase AP der Haushalts- Geschirrspülmaschine im "WLAN router" WLR implementiert ist. Dann kann es insbesondere genügen, dass die Kontrolleinheit C1 der Haushalts- Geschirrspülmaschine GS über ihre Kommunikationseinheit U1 lediglich ein Informationssignal IS1 mit Informationen über das jeweilig gewählte Geschirrspülprogramm und den Programm- Startzeitpunkt an den "WLAN router" WLR über die Aufwärts- Luftschnittstelle UL1 sendet. Die auf dem "WLAN router" WLR implementierte Steuerlogik ermittelt dann aus dem Informationssignal IS1 den Startzeitpunkt für das Einschalten der Dunstabzugshaube AZ spezifisch für das jeweilig gewählte Geschirrspülprogramm und übermittelt diesen über die Abwärts- Luftschnittstelle UL2 mittels ein oder mehrerer Informationssignale IS2*, insbesondere Steuersignale SS2*, an die Kommunikationseinheit U2 der Dunstabzugshaube AZ. Diese leidet das jeweilig empfangene Informationssignal IS2*, insbesondere Steuersignal SS2*, an die Kontrolleinheit C2 zur Auswertung weiter, so dass die Dunstabzugsvorrichtung AZ in die Lage versetzt wird, zeitlich passend zur Ausström- Betriebsphase AP in ihren Einschalt-Betriebsmodus EB zu wechseln. Dadurch, dass eine Luftströmung vom Ort der Haushalts- Geschirrspülmaschine GS zur räumlich entfernten Dunstabzugshaube AZ erzwungen wird, kann die feuchte und/oder wasserdampfhaltige Prozessluft PL, die aus dem Entlüftungsspalt ES oder aus einer Austrittsöffnung AO aus dem Spülbehälter SB während einer Ausström- Betriebsphase AP während des Trocknungsgangs TG in den Küchenraum KR ausströmt, zur Dunstabzugshaube AZ mitgeschleppt werden. Dadurch ist weitgehend vermieden, dass sich die feuchte und/oder wasserdampfhaltige Prozessluft PL im Küchenraum in unkontrolliert und/oder zu großräumig verteilen und ggf. an unerwünschten Orten des Küchenraums und/oder der Küche ansammeln kann. Dadurch ist einer Schimmelbildung im Küchenraum KR, insbesondere an den dortigen Küchenmöbeln, entgegengewirkt. Auf diese Weise bleibt die Luft im Küchenraum KR weitgehend trocken. Die aus dem Spülbehälter SB durch den Entlüftungsspalt ES oder die Ausströmöffnung AO austretende feuchte und/oder wasserdampfhaltige Prozessluft PL kann in vorteilhafter Weise durch aus dem Küchenraum KR in den Spülbehälter-Innenraum nachströmende, trockenere Raumluft ersetzt werden. Dies verbessert das Trocknungsergebnis für das Spülgut SG weiter.

Der "WLAN router" WLR kann insbesondere nach dem sogenannten Wi-Fi Standard ausgebildet sein.

In der Figur 1 ist zusätzlich eingezeichnet, dass die ausströmende feuchte und/oder wasserdampfhaltige Prozessluft PL zu einer Auslassöffnung in einer Wand des Küchenraums KR geführt ist, welche Komponente einer kontrollierten Wohnraumentlüftung AWE ist. In der Auslassöffnung kann beispielsweise ein kommunikationsfähiger Lüfter angeordnet sein, der mit entsprechenden Mitteln wie die Dunstabzugshaube AZ ein oder mehrere Informationssignale, insbesondere Steuersignale, von der Haushalts- Geschirrspülmaschine empfangen und verarbeiten kann. Alternativ ist die Auslassöffnung mit einem im Wohngebäude verlegten Abluftkanal verbunden, der zu einer Absaugeinheit wie z.B. einem Gebläse führt. Dieses bläst die in den Abluftkanal angesaugte Raumluft aus dem Küchenraum vorzugsweise ins Freie, d.h. aus dem Wohngebäude heraus. Diese kontrollierte Wohnraumentlüftung kann anstelle oder zusätzlich zur Dunstabzugshaube AZ in entsprechender Weise wie die Dunstabzugshaube AZ (siehe oben) auf direktem oder indirektem Weg über eine entsprechende Kommunikationsverbindung gesteuert werden.

Weiterhin ist es auch möglich, dass die Steuerlogik zum zeitlichen Koppeln der Ausström-Betriebsphase der Haushalts- Geschirrspülmaschine und der Enschalt- Betriebsphase der Dunstabzugshaube AZ über eine externe Steuerlogik SLO erfolgt, die auf ein oder mehreren Servern SV im Internet, die insbesondere in einer sogenannten "cloud" CL organisiert sind, vorhanden ist. Dazu ist der "WLAN router" WLR mit der "cloud" CL über eine Luftschnittstelle kommunikativ verbunden, welche eine Aufwärts-Kommunikationsverbindung ULC und eine Abwärts- Kommunikationsverbindung DLC umfasst. Günstiger Weise kann auf einem, vorzugsweise mobilen, Kommunikationsendgerät wie z.B. einem Smartphone oder einem "Tablet- PC" ein Steuerprogramm z.B. in Form einer sogenannten App installiert sein, über die vorzugsweise eine bidirektionale Kommunikationsverbindung zwischen dem Kommunikationsendgerät MCU und der externen Steuerlogik SLO in der "cloud" CL herstellbar ist. Diese bidirektionale Kommunikationsverbindung weist vorzugsweise eine Aufwärts- Luftschnittstelle UMC vom Kommunikationsendgerät MCU zur externen Steuerlogik SLO und eine Abwärts- Luftschnittstelle DCM von der externen Steuerlogik SLO zum Kommunikationsendgerät MCU auf. Zusätzlich oder unabhängig hiervon kann im lokalen Empfangsbereich des "WLAN routers" WLR zwischen diesem und dem Kommunikationsendgerät MCU eine Aufwärts- Luftschnittstelle UMS und eine Abwärts-Luftschnittstelle DSM aufgebaut werden. Auf diese Weise kann mittels des Steuerprogramms in Form einer App auf dem Kommunikationsendgerät MCU ein ausgewähltes Geschirrspülprogramm gestartet und dessen Ablauf kontrolliert werden. Insbesondere ist eine Auswahlmöglichkeit bereitgestellt, die die externe Steuerlogik SLO im Internet anweist, über eine entsprechende Signalisierung die Dunstabzugshaube AZ "zeitlich passend" zur Ausström- Betriebsphase AP der Haushalts- Geschirrspülmaschine einzuschalten.

Zusätzlich oder unabhängig hiervon sind natürlich auch andere Formen der Signalisierung zwischen der Haushalts-Geschirrspülmaschine GS und der Dunstabzugshaube AZ möglich. Verallgemeinert betrachtet ist die Haushalts- Geschirrspülmaschine GS über mindestens eine direkte oder indirekte Kommunikationsverbindung mit der Luftabzugs- oder Luft- Behandlungsvorrichtung derart koppelbar, dass mit einer Ausström-Betriebsphase der Haushalts- Geschirrspülmaschine, bei welcher Prozessluft aus dem Spülbehälter der Haushalts- Geschirrspülmaschine in den Küchenraum herausströmt, eine Einschalt- Betriebsphase der Luftabzugs- oder Luftbehandlungsvorrichtung zeitlich betrachtet korreliert, insbesondere zeitlich betrachtet teilweise oder ganz zusammenfällt. Insbesondere kann es dabei günstig sein, dass bereits um eine vorgegebene Zeitspanne zeitlich vor dem Startzeitpunkt der Ausström- Betriebsphase der Haushalts-Geschirrspülmaschine. die Luftabzugs- oder Luftbehandlungvorrichtung in ihren Einschalt-Betriebszustand wechselt und diesen zumindest während eines Anfangszeitabschnitts, insbesondere während der gesamte Zeitdauer der Ausström- Betriebsphase der Haushalts- Geschirrspülmaschine beibehält. Dadurch ist sichergestellt, dass auf jeden Fall mit Beginn der Ausström- Betriebsphase schon ein erzwungener, definierter Luftstrom von der Haushalts- Geschirrspülmaschine zu der räumlich entfernten Abzugs- und/oder Luftbehandlungsvorrichtung vorhanden ist, so dass von diesem erzwungenen Luftstrom die aus dem Spülbehälter austretende Prozessluft zwangsweise mitgeschleppt werden kann und sich nicht willkürlich bzw. zu unkontrolliert im Küchenraum verteilt.

Ein weiterer Fall, bei dem während einer Ausström- Betriebsphase feuchte und/oder wasserdampfhaltige Prozessluft aus dem Spülbehälter entweichen kann, kann insbesondere unmittelbar nach dem Ende der Trocknungsphase eines Geschirrspülprogramms eine Entladephase sein, während der die Tür, insbesondere Fronttür der Haushalts- Geschirrspülmaschine zum Entladen von Spülgut (meist viel weiter als der für die Trocknungsunterstützung vorgesehene Entlüftungsspalt) geöffnet wird. In der Figur 4 ist diese Entladephase, die nach dem Ende des Trocknungsgangs TG des Geschirrspülprogramms P folgt, mit EP bezeichnet. Sie ist strichpunktiert markiert. Diese Entladephase EP, die unmittelbar im Anschluss an das Ende des Trocknungsgangs TG zum Zeitpunkt tTE erfolgt, ist insofern kritisch, weil noch Reste von feuchter und/oder wasserdampfhaltiger Prozessluft PL aus dem Spülbehälter entweichen können. Auch dann ist es vorteilhaft, wenn die Luftabzugs- und/oder Luftbehandlungsvorrichtung wie z.B. die Dunstabzugshaube AZ aktiviert wird und für eine vorgegebene Zeitspanne wie z.B. bis zum Wiederschließen der Tür DO läuft, d.h. in Betrieb ist.

Ein weiterer Fall, bei dem während einer Ausström- Betriebsphase feuchte und/oder wasserdampfhaltige Prozessluft aus dem Spülbehält entweichen kann, kann insbesondere eine Nachlegephase zum Nachlegen von Spülgut in den Spülbehälter oder eine sonstige Aufmachphase sein, bei der die Tür, insbesondere die Fronttür wie z.B. DO, der Haushalts- Geschirrspülmaschine während eines laufenden Geschirrspülprogramms aufgemacht wird. So kann z.B. beim Öffnen der Tür während der Reinigungsphase oder der Klarspülphase eines Geschirrspülprogramms, bei der Spülflüssigkeit erwärmt worden ist, mit Feuchtigkeit beladene Prozessluft und/oder Wasserdampf durch den Türöffnungsspalt in den Aufstellungsraum der Haushalts- Geschirrspülmaschine entweichen. Auch in diesen Fällen ist es dann sehr vorteilhaft, wenn sich die Abzugs- und/oder Luftbehandlungsvorrichtung automatisiert durch ihre direkte oder indirekte Vernetzung mit der Haushalts- Geschirrspülmaschine einschaltet und für eine bestimmte Zeitspanne wie z.B. bis zum Schließen der Tür DO läuft, d.h. in Betrieb ist.

In den vorstehend erläuterten Fällen von Ausström- Betriebsphasen, bei denen jeweils feuchte und/oder wasserdampfhaltige Prozessluft aus dem Spülbehälter herausströmt, kann es insbesondere zweckmäßig sein, wenn die Luftabzugs- und/oder Luftbehandlungsvorrichtung zu Beginn der jeweiligen Ausström- Betriebsphase der Haushalts- Geschirrspülmaschine mit einem höheren Luftvolumenstrom als im späteren Verlauf der Ausström- Betriebsphase betrieben wird. Dadurch kann dann, wenn Prozessluft mit besonders viel Feuchtigkeit und/oder Wasserdampf aus dem Spülbehälter in den Wohnraum, insbesondere Küchenraum gelangt, diese feuchte und/oder wasserdampfhaltige Prozessluft durch die Luftabzugsvorrichtung aus dem Wohnraum, insbesondere Küchenraum, effizient abtransportiert werden, oder Feuchtigkeit aus der feuchten und/oder wasserdampfhaltigen Prozessluft durch die Luftbehandlungsvorrichtung effizient abgeschieden werden. Dadurch bleibt die Raumluft im Wohnraum, insbesondere Küchenraum, ausreichend trocken, ohne dass es dort zu Schimmelbildung oder zu anderen Beeinträchtigungen kommen kann.

Zweckmäßig kann es in Bezug auf die verschiedenen, vorstehend erläuterten Situationen sein, wenn mindestens ein Parameter eines Sensors, insbesondere Raumluftgütesensors, bevorzugt Feuchtigkeitssensors oder Geruchssensors, als zusätzliches Kriterium zum Steuern, insbesondere Einschalten und/oder Ausschalten, der Luftabzugs- und/oder Luftbehandlungsvorrichtung wie z.B. der Dunstabzugshaube AZ herangezogen wird. Der Sensor kann vorzugsweise Komponente der Luftabzugs- oder Luftbehandlungsvorrichtung sein. In der Figur 1 weist die Dunstabzugshaube AZ einen solchen Sensor RLS auf. Z.B. kann es zweckmäßig sein, die Luftabzugs- und/oder Luftbehandlungsvorrichtung in einer Ausström- Betriebsphase der Haushalts-Geschirrspülmaschine, während der feuchte und/oder wasserdampfhaltige Prozessluft aus dem Spülbehälter in den Wohnraum, insbesondere Küchenraum, in dem die Haushalts- Geschirrspülmaschine und die Luftabzugs- oder Luftbehandlungsvorrichtung räumlich getrennt voneinander installiert sind, herausströmt, erst dann einzuschalten, wenn vom Feuchtigkeitssensor ein bestimmter Grenzwert für den Feuchtigkeitsgehalt der Raumluft, d.h. die Luftfeuchtigkeit im Wohnraum, insbesondere im Küchenraum, überschritten wird. Solange dort der Feuchtigkeitsgehalt der Raumluft im Wohnraum, insbesondere Küchenraum, unterhalb dieses Grenzwerts liegt, wird die Raumluft als ausreichend trocken betrachtet, so dass ein unnötiges Einschalten der Luftabzugs- oder Luftbehandlungsvorrichtung unterbleiben kann. Dies spart elektrische Energie und vermeidet einen durch Betreiben der Luftabzugs- oder Luftbehandlungsvorrichtung, insbesondere durch deren ein oder mehrere laufende Lüfter, etwaig bedingten Geräuschpegel. Der Grenzwert liegt vorzugsweise niedriger als der Luftfeuchtigkeits-Schwellwert, der zum Einschalten der Luftabzugs- oder Luftbehandlungsvorrichtung für das Kochen insbesondere auf einem Kochfeld, das vorzugsweise unterhalb der Luftabzugs- oder Luftbehandlungsvorrichtung positioniert ist, vorgegeben bzw. festgelegt oder ermittelt ist. Solange während einer Ausström- Betriebsphase die Luftfeuchtigkeit der Raumluft den Grenzwert überschreitet, arbeitet die Luftabzugsvorrichtung und saugt die feuchte und/oder wasserdampfhaltige Luft aus dem Wohnraum, insbesondere Küchenraum, ab, oder die Luftbehandlungsvorrichtung sorgt für einen Entzug von Feuchtigkeit und/oder Wasserdampf z.B. durch Kondensation und/oder Sorption aus der Raumluft. Wenn der Feuchtigkeitsgehalt der Raumluft schließlich soweit auf einen Wert absinkt, der den Grenzwert wieder unterschreitet, wird die Luftabzugs- oder Luftbehandlungsvorrichtung wieder ausgeschaltet.

Ein weiterer Fall, bei dem die zeitliche Kopplung zwischen einer Ausström-Betriebsphase der Haushalts- Geschirrspülmaschine und einer Einschalt- Betriebsphase der Luftabzugs- oder Luftbehandlungsvorrichtung günstig ist, ist insbesondere dann gegeben, wenn während einer Stillstandsphase zwischen zwei zeitlich voneinander beanstandeten Geschirrspülprogrammen Prozessluft aus dem Spülbehälter zur Beseitigung unangenehmer Gerüche z.B. durch spaltweises Türaufmachen oder durch Aufmachen einer Auslassöffnung in den Küchenraum entweicht. Die Figur 5 veranschaulicht diese Situation. In der Stillstandsphase tP2S - tP1E zwischen zwei zeitlich voneinander beanstandeten Geschirrspülprogrammen P1 und P2 ist eine Geruchsbeseitigungsphase GP vorgesehen. Dazu wird die Tür, insbesondere Fronttür DO, der Geschirrspülmaschine um einen Entlüftungsspalt ES geöffnet, und zwar für die vorgegebene Zeitdauer zwischen tGPS und tGPE (auf der Zeitskala t betrachtet), d.h. die Türöffnung erfolgt zeitgesteuert für eine festgelegte Zeitdauer; anschließend wird die Tür wieder vollständig geschlossen. Etwa zeitgleich oder schon etwas vor der Türöffnung wird die Abzugs- und/oder Luftbehandlungsvorrichtung durch entsprechende Signalisierung automatisiert eingeschaltet und für die vorgegebene Zeitdauer der Geruchsbeseitigungsphase GP betrieben. In entsprechender Weise zur Türöffnung kann auch die etwaig eigens vorgesehene Ausströmöffnung AO zur Geruchsbeseitigung geöffnet werden, indem deren Verschlussvorrichtung aufgeht.

Ggf. kann durch die Heranziehung mindestens eines Gasparameters, der durch mindestens einen der Luftabzugs- ound/der Luftbehandlungsvorrichtung zugeordneten Geruchssensor ermittelt wird, dafür gesorgt werden, dass die Luftabzugs- oder Luftbehandlungsvorrichtung nur dann während einer Geruchsbeseitigungsphase der Haushalts- Geschirrspülmaschine eingeschaltet wird, wenn ein oder mehrere festgelegte Grenzwerte von ein oder mehreren unangenehmen, für den Menschen wahrnehmbaren Gasen in der Raumluft überschritten wird. Der Geruchssensor kann insbesondere Komponente der Luftabzugs- und/oder Luftbehandlungsvorrichtung sein.

## Patentansprüche

1. Steuerlogik (SLO) derart, dass eine als separates Haushaltsgerät ausgebildete Luftabzugs- (AZ, AWE) und/oder Luftbehandlungsvorrichtung (LBV) in Abhängigkeit von mindestens einem Zustandsparameter (ZP) einer Haushalts- Geschirrspülmaschine (GS) steuerbar, insbesondere einschaltbar und/oder ausschaltbar, ist, wobei die Haushalts- Geschirrspülmaschine (GS) über mindestens eine direkte oder indirekte Kommunikationsverbindung (DKV, IKV) mit der Luftabzugs- (AZ, AWE) und/oder Luftbehandlungsvorrichtung (LBV) derart koppelbar ist, dass mit einer Ausström-Betriebsphase (AP) der Haushalts- Geschirrspülmaschine (GS), bei welcher Prozessluft (PL) aus dem Spülbehälter (SB) der Haushalts- Geschirrspülmaschine (GS), insbesondere in einen Wohnraum, bevorzugt Küchenraum (KR), herausströmt, in dem die Haushalts- Geschirrspülmaschine (GS) und die Luftabzugs- (AZ, AWE) und/oder Luftbehandlungsvorrichtung (LBV) gemeinsam vorgesehen sind, eine Einschalt- Betriebsphase (EB) der Luftabzugs- (AZ, AWE) und/oder Luftbehandlungsvorrichtung (LBV) zeitlich betrachtet korreliert, insbesondere zeitlich betrachtet teilweise oder ganz zusammenfällt, und wobei die Steuerlogik (SLO) derart ausgebildet ist, dass über die mindestens eine direkte oder indirekte Kommunikationsverbindung (DKV, IKV) an eine Kommunikationseinheit (U2) der Luftabzugs- (AZ, AWE) und/oder Luftbehandlungsvorrichtung (LBV) mindestens ein Informationssignal (IS, IS2*), insbesondere Steuersignal (SS2*), sendbar ist, das veranlasst, dass die Luftabzugs- (AZ, AWE) und/oder Luftbehandlungsvorrichtung (LBV) zumindest während eines Zeitabschnitts, insbesondere Anfangszeitabschnitts, einer Ausström-Betriebsphase (AP) der Haushalts- Geschirrspülmaschine (GS), während der Prozessluft (PL) aus dem Spülbehälter (SB) der Haushalts- Geschirrspülmaschine (GS), insbesondere in den Wohnraum, bevorzugt Küchenraum (KR), herausströmt, in ihrem Einschalt- Betriebszustand (EB) ist, oder bereits um eine vorgebbare Zeitspanne (ZV) zeitlich vor dem Startzeitpunkt (tAPS) der Ausström- Betriebsphase (AP) der Haushalts- Geschirrspülmaschine (GS) in ihren Einschalt- Betriebszustand (EB) wechselt und diesen zumindest während eines Anfangszeitabschnitts, insbesondere während der Gesamtzeitdauer (TAP= tAPE - tAPS), der Ausström- Betriebsphase (AP) der Haushalts- Geschirrspülmaschine (GS) beibehält.

2. Steuerlogik nach Anspruch 1,
**dadurch gekennzeichnet,**
**dass** die Steuerlogik (SLO) Komponente der Haushalts- Geschirrspülmaschine (GS), der Luftabzugs- (AZ, AWE) und/oder Luftbehandlungsvorrichtung (LBV), eines, insbesondere mobilen, Kommunikationsendgeräts (MCU), eines lokalen "inhouse"- Servers, "WLAN-routers" (WLR) und/oder einer sonstigen haus- oder wohnungszugeordneten digitalen Intelligenz, und/oder mindestens eines Servers (SV), insbesondere einer cloud (CL1), des world wide web (Internet) ist.

3. Steuerlogik nach mindestens einem der vorhergehenden Ansprüche,
**dadurch gekennzeichnet,**
**dass** ein Zustandsparameter (ZP) der Haushalts- Geschirrspülmaschine (GS) eine Ausström- Betriebsphase (AP, GP, EP) repräsentiert, bei der Prozessluft (PL) aus dem Spülbehälter (SB) der Haushalts- Geschirrspülmaschine (GS), insbesondere in einen Wohnraum, bevorzugt Küchenraum (KR), in dem die Haushalts- Geschirrspülmaschine (GS) und die Luftabzugs- (AZ, AWE) und/oder Luftbehandlungsvorrichtung (LBV) gemeinsam vorgesehen sind, strömt.

4. Steuerlogik nach Anspruch 3,
**dadurch gekennzeichnet,**
**dass** die Ausström- Betriebsphase (AP) der Haushalts- Geschirrspülmaschine (GS) ein Teilabschnitt (tAPE - tAPS) oder der Gesamtabschnitt (tTE - tTS) der Trocknungsphase (TG) eines Geschirrspülprogramms (P) der Haushalts- Geschirrspülmaschine (GS) ist, so dass während ihrer Zeitdauer /tAPE - tAPS) feuchte und/oder wasserdampfhaltige Prozessluft (PL) aus dem Spülbehälter (SB), insbesondere in den Wohnraum, bevorzugt Küchenraum (KR), strömt.

5. Steuerlogik nach Anspruch 4,
**dadurch gekennzeichnet,**
**dass** während der Ausström- Betriebsphase (AP) der Trocknungsphase (TG) die Tür (DO) der Haushalts- Geschirrspülmaschine, insbesondere unter Zuhilfenahme einer automatischen Türöffnungsvorrichtung (ADO), um einen Entlüftungsspalt (ES) gegenüber ihrer Schließendstellung geöffnet ist, durch den die feuchte und/oder wasserdampfhaltige Prozessluft (PL) aus dem Spülbehälter (SB) strömt, und/oder dass während der Ausström- Betriebsphase (AP) der Trocknungsphase (TG) die feuchte und/oder wasserdampfhaltige Prozessluft (PL) durch mindestens eine Ausströmöffnung (AO) in mindestens einer Wandung des Spülbehälters (SB) und/oder der Tür (DO) der Haushalts- Geschirrspülmaschine (GS), insbesondere unter Zuhilfenahme eines Lüfters (FA), aus dem Spülbehälter (SB), insbesondere in den Wohnraum, bevorzugt Küchenraum (KR), austritt, insbesondere ausgeblasen wird.

6. Steuerlogik nach Anspruch 3,
**dadurch gekennzeichnet,**
**dass** die Ausström- Betriebsphase eine Geruchsbeseitigungsphase (GP) während einer Stillstandsphase zwischen zwei Geschirrspülprogrammen (P1, P2) ist, während der zur Beseitigung unangenehmer Gerüche im Spülbehälter (SB) Luft aus dem Spülbehälter (SB) der Haushalts- Geschirrspülmaschine (GS), insbesondere in den Wohnraum, bevorzugt Küchenraum (KR), ausströmt und Frischluft in den Spülbehälter (SB) hineinströmt.

7. Steuerlogik nach Anspruch 3,
**dadurch gekennzeichnet,**
**dass** die Ausström- Betriebsphase (EP) eine Entladephase (EP) unmittelbar nach Beendigung eines Geschirrspülprogramms (P) ist, während der die Tür (DO) der Haushalts- Geschirrspülmaschine (GS) zum Entladen von Spülgut (SG) aus dem Spülbehälter (SB) geöffnet wird, oder eine sonstige Tür- Aufmachphase während eines durchzuführenden Geschirrspülprogramms ist.

8. Steuerlogik nach mindestens einem der vorhergehenden Ansprüche,
**dadurch gekennzeichnet,**
**dass** die Kommunikationsverbindung mindestens eine Luftschnittstelle (LS1, LS2) und/oder mindestens eine elektrische Signalübertragungsleitung (SL1) umfasst.

9. Steuerlogik nach mindestens einem der vorhergehenden Ansprüche,
**dadurch gekennzeichnet,**
**dass** die Steuerlogik (SLO) derart ausgebildet ist, dass sie auf den Empfang mindestens eines Informationssignals (IS1) von einer Kommunikationseinheit (U1) der Haushalts- Geschirrspülmaschine (GS) hin das mindestens eine Informationssignal (IS2*), insbesondere Steuersignal (SS2*), zur Veranlassung der Inbetriebnahme der Luftabzugsvorrichtung (AZ, AWE) und/oder Luftbehandlungsvorrichtung (LBV) erzeugt.

10. Steuerlogik nach mindestens einem der vorhergehenden Ansprüche,
**dadurch gekennzeichnet,**
**dass** die Steuerlogik (SLO) eine indirekte Kommunikationsverbindung (IKV) zwischen der Haushalts- Geschirrspülmaschine (GS) und der Luftabzugs- (AZ, AWE) und/oder Luftbehandlungsvorrichtung (LBV) unterstützt, wobei die indirekte Kommunikationsverbindung (IKV) eine Aufwärts- Luftschnittstelle (UL1/ULC) zwischen der Kommunikationseinheit (U1) der Haushalts- Geschirrspülmaschine (GS) und der Steuerlogik (SLO) sowie eine Abwärts- Luftschnittstelle (DLC/DL2) zwischen der Steuerlogik (SLO) und der Kommunikationseinheit (U2) der Luftabzugs- (AZ, AWE) und/oder Luftbehandlungsvorrichtung (LBV) umfasst.

11. Steuerlogik nach mindestens einem der vorhergehenden Ansprüche,
**dadurch gekennzeichnet,**
**dass** mindestens ein Parameter eines Sensors, insbesondere Raumluftgütesensors (RLS), bevorzugt Feuchtigkeitssensors oder Geruchssensors, als zusätzliches Kriterium zum Steuern, insbesondere Einschalten und/oder Ausschalten, der Luftabzugs-(AZ, AWE) und/oder Luftbehandlungsvorrichtung (LBV) heranziehbar ist.

12. Haushalts- Geschirrspülmaschine (GS) mit einem Spülbehälter (SB) zur Aufnahme von Spülgut (SG) und mit einer Kontrolleinheit (C1) zur Durchführung von ein oder mehreren Geschirrspülprogrammen,
wobei die Haushalts- Geschirrspülmaschine (GS) eine Kommunikationseinheit (U1) derart aufweist, dass von dieser über eine Aufwärts- Luftschnittstelle (UL1/ULC) an eine der Haushalts- Geschirrspülmaschine (GS) zugeordnete, insbesondere externe, Steuerlogik (SLO), welche insbesondere nach mindestens einem der Ansprüche 1 bis 11 ausgebildet ist, mindestens ein Informationssignal (IS1) übermittelbar ist, aufgrund dessen die, insbesondere externe, Steuerlogik (SLO) über eine Abwärts-Luftschnittstelle (DLC/DL2) an die Kommunikationseinheit (U2) einer Luftabzugs-(AZ, AWE) und/oder Luftbehandlungsvorrichtung (LBV), die insbesondere im selben Wohnraum, bevorzugt Küchenraum (KR), wie die Haushalts- Geschirrspülmaschine (GS) separat, insbesondere räumlich entfernt, von dieser als weiteres Haushaltsgerät vorgesehen ist, mindestens ein Informationssignal (IS2*), insbesondere Steuersignal (SS2*), sendet, infolge dem die Luftabzugs- (AZ, AWE) und/oder Luftbehandlungsvorrichtung (LBV) zumindest während eines Teilabschnitts, insbesondere Anfangszeitabschnitts, einer Ausström- Betriebsphase (AP) der Haushalts- Geschirrspülmaschine (GS), während der Prozessluft (PL) aus dem Spülbehälter (SB) der Haushalts- Geschirrspülmaschine (GS), insbesondere in den Wohnraum, bevorzugt Küchenraum (KR), ausströmt, in ihrem Einschalt- Betriebszustand (EB) ist, oder bereits um eine vorgebbare Zeitspanne (ZV) zeitlich vor dem Startzeitpunkt (tAPS) der Ausström- Betriebsphase (AP) der Haushalts- Geschirrspülmaschine (GS) in ihren Einschalt- Betriebszustand (EB) wechselt und diesen zumindest während eines Teilabschnitts, insbesondere Anfangszeitabschnitts, bevorzugt während der Gesamtzeitdauer, der Ausström- Betriebsphase (AP) der Haushalts- Geschirrspülmaschine (GS) beibehält.

13. Luftabzugs- (AZ, AWE) und/oder Luftbehandlungsvorrichtung (LBV) mit einer Kommunikationseinheit (U2), die sich infolge mindestens eines Informationssignals (IS, IS2*), welches sie von einer, insbesondere nach Anspruch 12 ausgebildeten, Haushalts- Geschirrspülmaschine (GS), die insbesondere im selben Wohnraum, bevorzugt Küchenraum (KR), wie die Luftabzugsvorrichtung (AZ, AWE) und/oder Luftbehandlungsvorrichtung (LBV) separat, insbesondere räumlich entfernt, von dieser als weiteres Haushaltsgerät vorgesehen ist, über mindestens eine direkte oder indirekte Kommunikationsverbindung (DKV, IKV) empfängt, zumindest während eines Teilabschnitts, insbesondere Anfangszeitabschnitts, einer Ausström- Betriebsphase (AP) der Haushalts- Geschirrspülmaschine (GS), während der Prozessluft (PL) aus dem Spülbehälter (SB) der Haushalts- Geschirrspülmaschine (GS), insbesondere in den Wohnraum, bevorzugt Küchenraum (KR), strömt, in ihrem Einschalt- Betriebszustand (EB) ist, oder bereits um eine vorgebbare Zeitspanne (ZV) zeitlich vor dem Startzeitpunkt (tAPS) der Ausström- Betriebsphase (AP) der Haushalts- Geschirrspülmaschine (GS) in ihren Einschalt- Betriebszustand (EB) wechselt und diesen zumindest während eines Teilabschnitts, insbesondere Anfangszeitabschnitts, bevorzugt während der Gesamtzeitdauer, der Ausström- Betriebsphase (AP) der Haushalts- Geschirrspülmaschine (GS) beibehält.

14. Luftabzugs- und/oder Luftbehandlungsvorrichtung nach Anspruch 13,
**dadurch gekennzeichnet,**
**dass** die Luftabzugs- (AZ) und/oder Luftbehandlungsvorrichtung (LBV) eine zur Positionierung oberhalb eines Kochfelds (KF) vorgesehene Dunstabzugshaube oder ein in ein Kochfeld integrierter Kochfeldabzug ist.

15. Luftabzugs- und/oder Luftbehandlungsvorrichtung nach Anspruch 13,
**dadurch gekennzeichnet,**
**dass** die Luftabzugsvorrichtung (AWE) Komponente einer kontrollierten Wohnraumentlüftung ist.

16. Haushaltsgerätesystem mit einer Haushalts- Geschirrspülmaschine (GS), die nach Anspruch 12 ausgebildet ist, mit einer Steuerlogik (SLO), die nach mindestens einem der Ansprüche 1 bis 11 ausgebildet ist, und mit einer Luftabzugs- (AZ, AWE)) und/oder Luftbehandlungsvorrichtung (LBV), die nach mindestens einem der Ansprüche 13 bis 15 ausgebildet ist.

17. Steuerverfahren mittels einer Steuerlogik (SLO), die insbesondere nach mindestens einem der Ansprüche 1 bis 11 ausgebildet ist, derart, dass eine als separates Haushaltsgerät ausgebildete Luftabzugs- (AZ, AWE) und/oder Luftbehandlungsvorrichtung (LBV), die insbesondere nach mindestens einem der Ansprüche 13 bis 15 ausgebildet ist, in Abhängigkeit von mindestens einem Zustandsparameter (ZP) einer Haushalts- Geschirrspülmaschine (GS), die insbesondere nach Anspruch 12 ausgebildet ist, gesteuert, insbesondere eingeschaltet und/oder ausgeschaltet, wird, wobei
die Luftabzugs- (AZ, AWE) und/oder Luftbehandlungsvorrichtung (LBV) über mindestens eine direkte oder indirekte Kommunikationsverbindung (KV, DKV, IKV) mit der Haushalts- Geschirrspülmaschine (GS) derart gekoppelt wird, dass mindestens eine Ausström- Betriebsphase (AP) der Haushalts- Geschirrspülmaschine (GS), bei welcher Prozessluft (PL) aus dem Spülbehälter (SB) der Haushalts- Geschirrspülmaschine (GS) herausströmt, mit mindestens einer Einschalt- Betriebsphase (EP) der Luftabzugsvorrichtung (AZ, AWE) und/oder Luftbehandlungsvorrichtung (LBV) korreliert, insbesondere teilweise oder ganz zusammenfällt, und wobei die Luftabzugs-(AZ, AWE) und/oder Luftbehandlungsvorrichtung (LBV), die als separates Haushaltsgerät zusammen mit der Haushalts- Geschirrspülmaschine (GS) insbesondere im selben Wohnraum, bevorzugt Küchenraum (KR), vorgesehen ist, zumindest während eines Teilabschnitts, insbesondere Anfangszeitabschnitts, einer Ausström- Betriebsphase (AP) der Haushalts- Geschirrspülmaschine (GS), während der Prozessluft (PL) aus dem Spülbehälter (SB) der Haushalts- Geschirrspülmaschine (GS) in den Wohnraum, insbesondere Küchenraum (KR), strömt, in ihrem Einschalt- Betriebszustand (EB) betrieben wird, oder bereits um eine vorgebbare Zeitspanne (ZV) zeitlich vor dem Startzeitpunkt (tAPS) der Ausström- Betriebsphase (AP) der Haushalts- Geschirrspülmaschine (GS) in ihren Einschalt- Betriebszustand (EB) gebracht wird und diesen zumindest während eines Teilabschnitts, insbesondere Anfangszeitabschnitts, bevorzugt während der Gesamtzeitdauer, der Ausström- Betriebsphase (AP) der Haushalts- Geschirrspülmaschine (GS) beibehält.

18. Steuerverfahren nach Anspruch 17, **dadurch gekennzeichnet,**
**dass** die Luftabzugs- (AZ, AWE) und/oder Luftbehandlungsvorrichtung (LBV) zu Beginn der Ausström- Betriebsphase (AP) der Haushalts- Geschirrspülmaschine (GS) mit einem höheren Luftvolumenstrom als im späteren Verlauf der Ausström- Betriebsphase (AP) betrieben wird.

## Claims

1. Control logic (SLO) such that an air-extraction (AZ, AWE) and/or air-treatment device (LBV) which is configured as a separate household appliance can be controlled, in particular switched on and/or switched off, as a function of at least one state parameter (ZP) of a household dishwasher (GS), wherein the household dishwasher (GS) can be coupled via at least one direct or indirect communication connection (DKV, IKV) to the air-extraction (AZ, AWE) and/or air-treatment device (LBV) such that a switched-on operating phase (EB) of the air-extraction (AZ, AWE) and/or air-treatment device (LBV) correlates, considered chronologically, in particular partially or entirely coincides, considered chronologically, with an outflow operating phase (AP) of the household dishwasher (GS), in which process air (PL) flows out of the dishwasher cavity (SB) of the household dishwasher (GS), in particular into a living space, preferably a kitchen space (KR), in which the household dishwasher (GS) and the air-extraction (AZ, AWE) and/or air-treatment device (LBV) are provided together, and wherein the control logic (SLO) is configured such that via the at least one direct or indirect communication connection (DKV, IKV) at least one information signal (IS, IS2*), in particular a control signal (SS2*), can be transmitted to a communication unit (U2) of the air-extraction (AZ, AWE) and/or air-treatment device (LBV), which causes the air-extraction (AZ, AWE) and/or air-treatment device (LBV) to be in its switched-on operating state (EB) at least during a time period, in particular a starting time period, of an outflow operating phase (AP) of the household dishwasher (GS), during which process air (PL) flows out of the dishwasher cavity (SB) of the household dishwasher (GS), in particular into the living space, preferably the kitchen space (KR), or to have already changed into its switched-on operating state (EB) for a predeterminable period of time (ZV) before the starting time (tAPS) of the outflow operating phase (AP) of the household dishwasher (GS), and to maintain this operating state at least during a starting time period, in particular during the entire time period (TAP = tAPE - tAPS), of the outflow operating phase (AP) of the household dishwasher (GS).

2. Control logic according to claim 1, **characterized in that** the control logic (SLO) is a component of the household dishwasher (GS), the air-extraction (AZ, AWE) and/or air-treatment device (LBV), an in particular mobile communication terminal device (MCU), a local "in house" server, "WLAN router" (WLR), and/or any other digital intelligence assigned to the house or apartment and/or at least one server (SV), in particular a cloud (CL1), of the World Wide Web (Internet).

3. Control logic according to at least one of the preceding claims, **characterized in that** a state parameter (ZP) of the household dishwasher (GS) represents an outflow operating phase (AP, GP, EP) in which process air (PL) flows out of the dishwasher cavity (SB) of the household dishwasher (GS), in particular into a living space, preferably a kitchen space (KR), in which the household dishwasher (GS) and the air-extraction (AZ, AWE) and/or air-treatment device (LBV) are provided together.

4. Control logic according to claim 1, **characterized in that** the outflow operating phase (AP) of the household dishwasher (GA) is a portion (tAPE - tAPS), or the entire period (tTE - tTS), of the drying phase (TG) of a dishwashing program (P) of the household dishwasher (GS), so that during the time period (tAPE - tAPS) humid and/or water vapour-containing process air (PL) flows out of the dishwasher cavity (SB), in particular into the living space, preferably the kitchen space (KR).

5. Control logic according to claim 4, **characterized in that** during the outflow operating phase (AP) of the drying phase (TG) the door (DO) of the household dishwasher, in particular with the assistance of an automatic door opening device (ADO), is opened by a ventilation gap (ES) relative to its final closed position, through which the humid and/or water vapour-containing process air (PL) flows out of the dishwasher cavity (SB), and/or during the outflow operating phase (AP) of the drying phase (TG) the humid and/or water vapour-containing process air (PL) escapes, in particular is blown out, through at least one outflow opening (AO) in at least one wall of the dishwasher cavity (SB) and/or the door (DO) of the household dishwasher (GS), in particular with the assistance of a fan (FA), out of the dishwasher cavity (SB), in particular into the living space, preferably the kitchen space (KR).

6. Control logic according to claim 3, **characterized in that** the outflow operating phase is an odour removal phase (GP) during a standstill phase between two dishwashing programs (P1, P2), during which air flows out of the dishwasher cavity (SB) of the household dishwasher (GS), in particular into the living space, preferably the kitchen space (KR), for removing unpleasant odours in the dishwasher cavity (SB) and fresh air flows into the dishwasher cavity (SB).

7. Control logic according to claim 3, **characterized in that** the outflow operating phase (EP) is an unloading phase (EP) immediately after finishing a dishwashing program (P), during which the door (DO) of the household dishwasher (GS) is opened for unloading items to be washed (SG) from the dishwasher cavity (SB), or is any other door opening phase during a dishwashing program to be carried out.

8. Control logic according to at least one of the preceding claims, **characterized in that** the communication connection comprises at least one air interface (LS1, LS2) and/or at least one electrical signal transmission line (SL1).

9. Control logic according to at least one of the preceding claims, **characterized in that** the control logic (SLO) is configured such that upon receiving at least one information signal (IS 1) from a communication unit (U1) of the household dishwasher (GS) it generates the at least one information signal (IS2*), in particular a control signal (SS2*), for initiating the start-up of the air-extraction device (AZ, AWE) and/or air-treatment device (LBV).

10. Control logic according to at least one of the preceding claims, **characterized in that** the control logic (SLO) assists an indirect communication connection (IKV) between the household dishwasher (GS) and the air-extraction (AZ, AWE) and/or air-treatment device (LBV), wherein the indirect communication connection (IKV) comprises an upward air interface (UL1/ULC) between the communication unit (U1) of the household dishwasher (GS) and the control logic (SLO) and a downward air interface (DLC/DL2) between the control logic (SLO) and the communication unit (U2) of the air-extraction (AZ, AWE) and/or air-treatment device (LBV).

11. Control logic according to at least one of the preceding claims, **characterized in that** at least one parameter of a sensor, in particular a room air quality sensor (RLS), preferably a humidity sensor or an odour sensor, can be used as an additional criterion for controlling, in particular for switching on and/or switching off, the air-extraction (AZ, AWE) and/or air-treatment device (LBV).

12. Household dishwasher (GS) comprising a dishwasher cavity (SB) for receiving items to be washed (SG) and comprising a control unit (C1) for carrying out one or more dishwashing programs,
wherein the household dishwasher (GS) has a communication unit (U1) such that at least one information signal (IS 1) can be transmitted thereby via an upward air interface (UL1/ULC) to an, in particular external, control logic (SLO) assigned to the household dishwasher (GS), which is configured in particular according to at least one of claims 1 to 11, on the basis of which the, in particular external, control logic (SLO) transmits at least one information signal (IS2*), in particular a control signal (SS2*), via a downward air interface (DLC/DL2) to the communication unit (U2) of an air-extraction (AZ, AWE) and/or air-treatment device (LBV) which is provided, in particular, in the same living space, preferably the kitchen space (KR), as the household dishwasher (GS) separately, in particular spatially removed therefrom as a further household appliance, on the basis of which the air-extraction (AZ, AWE) and/or the air-treatment device (LBV) is in its switched-on operating state (EB) at least during a portion, in particular a starting time period, of an outflow operating phase (AP) of the household dishwasher (GS) during which process air (PL) flows out of the dishwasher cavity (SB) of the household dishwasher (GS), in particular into the living space, preferably the kitchen space (KR), or has already changed into its switched-on operating state (EB) for a predeterminable period of time (ZV) before the starting time (tAPS) of the outflow operating phase (AP) of the household dishwasher (GS), and maintains this operating state at least during a portion, in particular a starting time period, preferably during the entire time period, of the outflow operating phase (AP) of the household dishwasher (GS).

13. Air-extraction (AZ, AWE) and/or air-treatment device (LBV) comprising a communication unit (U2), which on the basis of at least one information signal (IS, IS2*) which it receives via at least one direct or indirect communication connection (DKV, IKV) from a household dishwasher (GS) which is configured, in particular, according to claim 12 and which is provided, in particular, in the same living space, preferably kitchen space (KR), as the air-extraction device (AZ, AWE) and/or air-treatment device (LBV), separately, in particularly spatially removed therefrom as a further household appliance, is in its switched-on operating state (EB) at least during a portion, in particular a starting time period, of an outflow operating phase (AP) of the household dishwasher (GS) during which process air (PL) flows out of the dishwasher cavity (SB) of the household dishwasher (GS), in particular into the living space, preferably the kitchen space (KR), or has already changed into its switched-on operating state (EB) for a predeterminable period of time (ZV) before the starting time (tAPS) of the outflow operating phase (AP) of the household dishwasher (GS), and maintains this operating state at least during a portion, in particular a starting time period, preferably during the entire time period, of the outflow operating phase (AP) of the household dishwasher (GS).

14. Air-extraction and/or air-treatment device according to claim 13, **characterized in that** the air-extraction (AZ) and/or air-treatment device (LBV) is an extractor hood provided for positioning above a hob (KF) or a hob extractor integrated in a hob.

15. Air-extraction and/or air-treatment device according to claim 13, **characterized in that** the air-extraction device (AWE) is a component of a controlled living space ventilation.

16. Household appliance system comprising a household dishwasher (GS) which is configured according to claim 12, comprising a control logic (SLO) which is configured according to at least one of claims 1 to 11 and comprising an air-extraction (AZ, AWE) and/or air-treatment device (LBV) which is configured according to at least one of claims 13 to 15.

17. Control method by means of a control logic (SLO) which is configured, in particular, according to at least one of claims 1 to 11, such that an air-extraction (AZ, AWE) and/or air-treatment device (LBV) which is configured as a separate household appliance and which is configured, in particular, according to at least one of claims 13 to 15, is controlled, in particular switched on and/or switched off, as a function of at least one state parameter (ZP) of a household dishwasher (GS) which is configured, in particular, according to claim 12,
wherein the air-extraction (AZ, AWE) and/or air-treatment device (LBV) is coupled via at least one direct or indirect communication connection (KV, DKV, IKV) to the household dishwasher (GS) such that at least one outflow operating phase (AP) of the household dishwasher (GS) in which process air (PL) flows out of the dishwasher cavity (SB) of the household dishwasher (GS) correlates, in particular partially or entirely coincides, with at least one switched-on operating phase (EP) of the air-extraction (AZ, AWE) and/or air-treatment device (LBV), and wherein the air-extraction (AZ, AWE) and/or air-treatment device (LBV) which is provided as a separate household appliance together with the household dishwasher (GS), in particular in the same living space, preferably the kitchen space (KR), is operated in its switched-on operating state (EB) at least during a portion, in particular a starting time period, of an outflow operating phase (AP) of the household dishwasher (GS), during which process air (PL) flows out of the dishwasher cavity (SB) of the household dishwasher (GS) into the living space, in particular the kitchen space (KR), or has been already brought into its switched-on operating state (EB) for a predeterminable period of time (ZV) before the starting time (tAPS) of the outflow operating phase (AP) of the household dishwasher (GS), and maintains this operating state at least during a portion, in particular a starting time period, preferably during the entire time period, of the outflow operating phase (AP) of the household dishwasher (GS).

18. Control method according to claim 17, **characterized in that** the air-extraction (AZ, AWE) and/or air-treatment device (LBV) at the start of the outflow operating phase (AP) of the household dishwasher (GS) is operated at a greater volumetric air flow than in the subsequent stage of the outflow operating phase (AP).

## Revendications

1. Logique de commande (SLO) de telle sorte qu'un dispositif d'aspiration d'air (AZ, AWE) et/ou de traitement d'air (LBV) réalisé en tant qu'appareil électroménager séparé peut être commandé en fonction d'au moins un paramètre d'état (ZP) d'un lave-vaisselle électroménager (GS), en particulier peut être mis en marche et/ou mis à l'arrêt, dans lequel le lave-vaisselle électroménager (GS) peut être couplé au dispositif d'aspiration d'air (AZ, AWE) et/ou de traitement d'air (LBV) par l'intermédiaire d'au moins une liaison de communication directe ou indirecte (DKV, IKV) de telle sorte qu'avec une phase de fonctionnement de sortie (AP) du lave-vaisselle électroménager (GS), lors de laquelle de l'air de traitement (PL) sort de la cuve de lavage (SB) du lave-vaisselle électroménager (GS), en particulier dans une pièce habitable, de préférence une cuisine (KR), dans laquelle le lave-vaisselle électroménager (GS) et le dispositif d'aspiration d'air (AZ, AWE) et/ou de traitement d'air (LBV) sont prévus ensemble, une phase de fonctionnement en marche (EB) du dispositif d'aspiration d'air (AZ, AWE) et/ou de traitement d'air (LBV) effectue une corrélation de manière chronologique, en particulier coïncide de manière chronologique en partie ou en totalité, et dans laquelle la logique de commande (SLO) est réalisée de telle sorte que par l'intermédiaire de l'au moins une liaison de communication directe ou indirecte (DKV, IKV) au moins un signal d'information (IS, IS2*), en particulier un signal de commande (SS2*), peut être envoyé à une unité de communication (U2) du dispositif d'aspiration d'air (AZ, AWE) et/ou de traitement d'air (LBV) qui incite à ce que le dispositif d'aspiration d'air (AZ, AWE) et/ou de traitement d'air (LBV) au moins pendant un intervalle de temps, en particulier un intervalle de temps initial, d'une phase de fonctionnement de sortie (AP) du lave-vaisselle électroménager (GS), lors de laquelle de l'air de traitement (PL) sort de la cuve de lavage (SB) du lave-vaisselle électroménager (GS), en particulier dans la pièce habitable, de préférence la cuisine (KR), est dans son état de fonctionnement en marche (EB) ou déjà change temporellement à raison d'un intervalle de temps prédéfinissable (ZV) avant l'heure de début (tAPS) de la phase de fonctionnement de sortie (AP) du lave-vaisselle électroménager (GS) dans son état de fonctionnement en marche (EB) et conserve celui-ci au moins pendant un intervalle de temps initial, en particulier pendant la durée totale (TAP = tAPE - tAPS), de la phase de fonctionnement de sortie (AP) du lave-vaisselle électroménager (GS).

2. Logique de commande selon la revendication 1,
**caractérisée en ce que**
la logique de commande (SLO) est un composant du lave-vaisselle électroménager (GS), du dispositif d'aspiration d'air (AZ, AWE) et/ou de traitement d'air (LBV), d'un terminal de communication (MCU), en particulier mobile, d'un serveur « interne », d'un « routeur WLAN » (WLR) et/ou d'une intelligence numérique diverse associée à la maison ou à l'habitation et/ou d'au moins un serveur (SV), en particulier d'un nuage (CL1), du world wide web (internet).

3. Logique de commande selon l'une quelconque des revendications précédentes,
**caractérisée en ce qu'**
un paramètre d'état (ZP) du lave-vaisselle électroménager (GS) représente une phase de fonctionnement de sortie (AP, GP, EP) lors de laquelle de l'air de traitement (PL) en provenance de la cuve de lavage (SB) du lave-vaisselle électroménager (GS) entre, en particulier dans une pièce habitable, en particulier une cuisine (KR), dans laquelle le lave-vaisselle électroménager (GS) et le dispositif d'aspiration d'air (AZ, AWE) et/ou de traitement d'air (LBV) sont prévus ensemble.

4. Logique de commande selon la revendication 3,
**caractérisée en ce que**
la phase de fonctionnement de sortie (AP) du lave-vaisselle électroménager (GS) est une section (tAPE-tAPS) ou la totalité (tTE-tTS) de la phase de séchage (TG) d'un programme de lavage de vaisselle (P) du lave-vaisselle électroménager (GS), de sorte que pendant sa durée (tAPE-tAPS) de l'air de traitement (PL) humide ou contenant de la vapeur d'eau sort de la cuve de lavage, pour aller en particulier dans la pièce habitable, de préférence la cuisine (KR).

5. Logique de commande selon la revendication 4,
**caractérisée en ce que**
pendant la phase de fonctionnement de sortie (AP) de la phase de séchage (TG) la porte (DO) du lave-vaisselle électroménager, en particulier par recours à un dispositif d'ouverture de porte automatique (ADO), est ouverte à raison d'un interstice d'aération (ES) par rapport à sa position terminale de fermeture, à travers lequel l'air de traitement (PL) humide et/ou contenant de la vapeur d'eau sort de la cuve de lavage (SB) et/ou **en ce que** pendant la phase de fonctionnement de sortie (AP) de la phase de séchage (TG) l'air de traitement (PL) humide et/ou contenant de la vapeur d'eau sort, en particulier est soufflé, par le biais d'au moins une ouverture de sortie (AO) dans au moins une paroi de la cuve de lavage (SB) et/ou de la porte (DO) du lave-vaisselle électroménager (GS), en particulier par recours à un aérateur (FA), à partir de la cuve de lavage (SB), en particulier dans la pièce habitable, de préférence la cuisine (KR).

6. Logique de commande selon la revendication 3,
**caractérisée en ce que**
la phase de fonctionnement de sortie est une phase de neutralisation de mauvaises odeurs (GP) pendant une phase d'attente entre deux programmes de lavage de vaisselle (P1, P2), pendant laquelle pour la neutralisation de mauvaises odeurs désagréables dans la cuve de lavage (SB) de l'air sort de la cuve de lavage (SB) du lave-vaisselle électroménager (GS), en particulier dans la pièce habitable, de préférence la cuisine (KR), et de l'air frais pénètre dans la cuve de lavage (SB).

7. Logique de commande selon la revendication 3,
**caractérisée en ce que**
la phase de fonctionnement de sortie (EP) est une phase d'évacuation (EP) directement après la fin d'un programme de lavage de vaisselle (P), pendant laquelle la porte (DO) du lave-vaisselle électroménager (GS) est ouverte pour le déchargement d'articles à laver (SG) hors de la cuve de lavage (SB), ou une autre phase d'ouverture de porte pendant un programme de lavage de vaisselle à exécuter.

8. Logique de commande selon au moins l'une quelconque des revendications précédentes,
**caractérisée en ce que**
la liaison de communication comprend au moins une interface radio (LS1, LS2) et/ou au moins une ligne électrique de transmission de signaux (SL1).

9. Logique de commande selon au moins l'une quelconque des revendications précédentes,
**caractérisée en ce que**
la logique de commande (SLO) est réalisée de telle sorte qu'elle génère au moment de la réception d'au moins un signal d'information (IS1) par une unité de communication (U1) du lave-vaisselle électroménager (GS) l'au moins un signal d'information (IS2*), notamment un signal de commande (SS2*) pour une incitation à la mise en service du dispositif d'aspiration d'air (AZ, AWE) et/ou de traitement d'air (LBV).

10. Logique de commande selon au moins l'une quelconque des revendications précédentes,
**caractérisée en ce que**
la logique de commande (SLO) soutient une liaison de communication indirecte (IKV) entre le lave-vaisselle électroménager (GS) et le dispositif d'aspiration d'air (AZ, AWE) et/ou de traitement d'air (LBV), dans laquelle la liaison de communication indirecte (IKV) comprend une interface radio montante (UL1/ULC) entre l'unité de communication (U1) du lave-vaisselle électroménager (GS) et la logique de commande (SLO) ainsi qu'une interface radio descendante (DLC/DL2) entre la logique de commande (SLO) et l'unité de communication (U2) du dispositif d'aspiration d'air (AZ, AWE) et/ou de traitement d'air (LBV).

11. Logique de commande selon au moins l'une quelconque des revendications précédentes,
**caractérisée en ce que**
l'au moins un paramètre d'un détecteur, en particulier d'un détecteur de qualité de l'air intérieur (RLS), de préférence d'un détecteur d'humidité ou d'un détecteur de mauvaises odeurs, est utilisable en tant que critère supplémentaire pour la commande, en particulier la mise en marche et/ou la mise à l'arrêt, du dispositif d'aspiration d'air (AZ, AWE) et/ou de traitement d'air (LBV).

12. Lave-vaisselle électroménager (GS) avec une cuve de lavage (SB) pour la réception d'articles à laver (SG) et avec une unité de contrôle (C1) pour l'exécution par un ou plusieurs programmes de lavage de vaisselle,
dans lequel le lave-vaisselle électroménager (GS) présente une unité de communication (U1) de telle sorte que par celle-ci au moins un signal d'information (IS1) peut être transmis par l'intermédiaire d'une interface radio montante (UL1/ULC) à une logique de commande (SLO), en particulier externe, associée au lave-vaisselle électroménager (GS), laquelle logique de commande est réalisée en particulier selon au moins l'une quelconque des revendications 1 à 11, , en raison duquel la logique de commande (SLO), en particulier externe, par l'intermédiaire d'une interface radio descendante (DLC/DL2) envoie à l'unité de communication (U2) d'un dispositif d'aspiration d'air (AZ, AWE) et/ou de traitement d'air (LBV), qui est prévu en particulier dans la même pièce habitable, de préférence la cuisine (KR), que le lave-vaisselle électroménager (GS) séparément, en particulier éloigné dans l'espace, de celui-ci en tant qu'autre appareil électroménager, au moins un signal d'information (IS2*), en particulier un signal de commande (SS2*), à la suite de quoi le dispositif d'aspiration d'air (AZ, AWE) et/ou de traitement d'air (LBV) au moins pendant une partie, en particulier un intervalle de temps initial, d'une phase de fonctionnement de sortie (AP) du lave-vaisselle électroménager (GS), lors de laquelle de l'air de traitement (PL) sort de la cuve de lavage (SB) du lave-vaisselle électroménager (GS), et va en particulier dans la pièce habitable, de préférence la cuisine (KR), est dans son état de fonctionnement en marche (EB) ou déjà change temporellement à raison d'un intervalle de temps prédéfinissable (ZV) avant l'heure de début (tAPS) de la phase de fonctionnement de sortie (AP) du lave-vaisselle électroménager (GS) dans son état de fonctionnement en marche (EB) et conserve celui-ci au moins pendant une partie, en particulier un intervalle de temps initial, de préférence pendant la durée totale, de la phase de fonctionnement de sortie (AP) du lave-vaisselle électroménager (GS).

13. Dispositif d'aspiration d'air (AZ, AWE) et/ou de traitement d'air (LBV) avec une unité de communication (U2) qui, à la suite d'au moins un signal d'informations (IS, IS2*) qu'elle reçoit par l'intermédiaire d'au moins une liaison de communication directe ou indirecte (DKV, IKV) à partir d'un lave-vaisselle électroménager (GS), réalisé en particulier selon la revendication 12, qui est prévu en particulier dans la même pièce habitable, en particulier la cuisine (KR), que le dispositif d'aspiration d'air (AZ, AWE) et/ou de traitement d'air (LBV) séparément, en particulier éloigné dans l'espace, de celui-ci en tant qu'autre appareil électroménager, au moins pendant une partie, en particulier un intervalle de temps initial, d'une phase de fonctionnement de sortie (AP) du lave-vaisselle électroménager (GS), lors de laquelle de l'air de traitement (PL) en provenance de la cuve de lavage (SB) du lave-vaisselle électroménager (GS), entre notamment dans la pièce habitable, de préférence la cuisine (KR), est dans son état de fonctionnement en marche (EB), ou déjà change temporellement à raison d'un intervalle de temps prédéfinissable (ZV) avant l'heure de début (tAPS) de la phase de fonctionnement de sortie (AP) du lave-vaisselle électroménager (GS) dans son état de fonctionnement en marche (EB) et conserve celui-ci au moins pendant une partie, en particulier un intervalle de temps initial, de préférence pendant la durée totale, de la phase de fonctionnement de sortie (AP) du lave-vaisselle électroménager (GS).

14. Dispositif d'aspiration d'air et/ou de traitement d'air selon la revendication 13,
**caractérisé en ce que**
le dispositif d'aspiration d'air (AZ) et/ou de traitement d'air (LBV) est une hotte aspirante prévue pour être positionnée au-dessus d'une plaque de cuisson (KF) ou un dispositif aspirant de table de cuisson intégré dans une table de cuisson.

15. Dispositif d'aspiration d'air et/ou de traitement d'air selon la revendication 13,
**caractérisé en ce que**
le dispositif d'aspiration d'air (AWE) est un composant d'une aération de pièce habitable contrôlée.

16. Système pour appareils électroménagers avec un lave-vaisselle électroménager (GS) qui est réalisé selon la revendication 12, avec une logique de commande (SLO) qui est réalisée selon au moins l'une quelconque des revendications 1 à 11, et avec un dispositif d'aspiration d'air (AZ, AWE) et/ou de traitement d'air (LBV) qui est réalisé selon l'une quelconque des revendications 13 à 15.

17. Procédé de commande au moyen d'une logique de commande (SLO), qui est réalisée en particulier selon au moins l'une quelconque des revendications 1 à 11, de telle sorte qu'un dispositif d'aspiration d'air (AZ, AWE) et/ou de traitement d'air (LBV) réalisé en tant qu'appareil électroménager séparé, qui est réalisé en particulier selon au moins l'une quelconque des revendications 13 à 15, est commandé, en particulier mis en marche et/ou mis à l'arrêt, en fonction d'au moins un paramètre d'état (ZP) d'un lave-vaisselle électroménager (GS), qui est notamment réalisé selon la revendication 12, dans lequel
le dispositif d'aspiration d'air (AZ, AWE) et/ou de traitement d'air (LBV) est couplé au lave-vaisselle électroménager (GS) par l'intermédiaire d'au moins une liaison de communication directe ou indirecte (KV, DKV, IKV) de telle sorte qu'au moins une phase de fonctionnement de sortie (AP) du lave-vaisselle électroménager (GS), lors de laquelle de l'air de traitement (PL) sort de la cuve de lavage (SB) du lave-vaisselle électroménager (GS), effectue une corrélation avec au moins une phase de fonctionnement en marche (EP) du dispositif d'aspiration d'air (AZ, AWE) et/ou du dispositif de traitement d'air (LBV), coïncide en particulier de manière chronologique en partie ou en totalité, et dans lequel le dispositif d'aspiration d'air (AZ, AWE) et/ou de traitement d'air (LBV), qui est prévu en tant qu'appareil électroménager séparé conjointement avec le lave-vaisselle électroménager (GS) en particulier dans la même pièce habitable, de préférence la cuisine (KR), au moins pendant une partie, en particulier un intervalle de temps initial, d'une phase de fonctionnement de sortie (AP) du lave-vaisselle électroménager (GS), lors de laquelle de l'air de traitement (PL) en provenance de la cuve de lavage (SB) du lave-vaisselle électroménager (GS) va dans la pièce habitable, en particulier la cuisine (KR), fonctionne dans son état de fonctionnement en marche (EB), ou déjà est amené à raison d'un intervalle de temps prédéfinissable (ZV) temporellement avant l'heure de début (tAPS) de la phase de fonctionnement en marche (EB) et conserve celui-ci au moins pendant une partie, en particulier un intervalle de temps initial, de préférence pendant la durée totale, de la phase de fonctionnement de sortie (AP) du lave-vaisselle électroménager (GS).

18. Procédé de commande selon la revendication 17, **caractérisé en ce que** le dispositif d'aspiration d'air (AZ, AWE) et/ou de traitement d'air (LBV) fonctionne au début de la phase de fonctionnement de sortie (AP) du lave-vaisselle électroménager (GS) avec un flux de volume d'air plus élevé que dans un stade ultérieur de la phase de fonctionnement de sortie (AP).
